(19) Europäisches Patentamt
European Patent Office
Office européen des brevets

(11) **EP 4 280 606 A1**

(12) **EUROPEAN PATENT APPLICATION**
published in accordance with Art. 153(4) EPC

(43) Date of publication:
   **22.11.2023 Bulletin 2023/47**

(21) Application number: **21919720.9**

(22) Date of filing: **24.12.2021**

(51) International Patent Classification (IPC):
   *H04N 19/70* (2014.01)

(52) Cooperative Patent Classification (CPC):
   **H04N 19/70**

(86) International application number:
   **PCT/JP2021/048119**

(87) International publication number:
   **WO 2022/153834 (21.07.2022 Gazette 2022/29)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority: **12.01.2021 JP 2021002575**

(71) Applicant: **Sony Semiconductor Solutions
   Corporation
   Atsugi-shi, Kanagawa 243-0014 (JP)**

(72) Inventors:
   • **NAGUMO, Takefumi
     Atsugi-shi, Kanagawa 243-0014 (JP)**
   • **KITAMURA, Takuya
     Atsugi-shi, Kanagawa 243-0014 (JP)**
   • **HISHINUMA, Sinsuke
     Atsugi-shi, Kanagawa 243-0014 (JP)**

(74) Representative: **MFG Patentanwälte
   Meyer-Wildhagen Meggle-Freund
   Gerhard PartG mbB
   Amalienstraße 62
   80799 München (DE)**

(54) **INFORMATION PROCESSING DEVICE AND METHOD**

(57)   The present disclosure relates to an information processing device and an information processing method capable of achieving code quantity control while securely retaining some of pixel values of sensing data.

Whether or not each of pixel values of sensing data is a reserved word that is a predetermined value determined beforehand is determined. A flag map that indicates a position of a reserved word pixel that is a pixel having the reserved word as a pixel value and non-reserved word data that includes a pixel value of a non-reserved word pixel that is a pixel other than the reserved word pixel are generated. The generated flag map is subjected to lossless coding to generate a flag stream. The generated non-reserved word data is coded to generate a pixel stream. For example, the present disclosure is applicable to an information processing device, an image processing device, an electronic apparatus, an information processing method, an image processing method, a program, or the like.

FIG.7

EP 4 280 606 A1

**Description**

[Technical Field]

The present disclosure relates to an information processing device and an information processing method, and particularly to an information processing device and an information processing method capable of achieving code quantity control while securely retaining some of pixel values of sensing data.

[Background Art]

Use of an image sensor for sensing purposes has been increasing in recent years. For example, there has been developed a technology which measures a distance from a target object by detecting a phase difference between a sine wave and a reflected wave applied from a light source (e.g., see NPL 1). In the case of using an image sensor for such type of sensing, output from the image sensor is typically combined with post-stage signal processing and processed into desired data before output, rather than being used without change. For example, this post-stage signal processing has been achieved by coding (compressing) data obtained by sensing, and outputting the coded data. Moreover, there has been developed such a method which selects any color in a map image, separates data into an interpolation color file and a selection color flag file, and separately compresses these files (for example, see PTL 1).

[Citation List]

[Non Patent Literature]

[NPL 1]
Keita Yasutomi and Shoji Kawahito, "Technical Description Time-of-Flight Camera," The journal of the Institute of Image Information and Television Engineers, 2016, Vol. 70, No. 11, pp. 880-885, accepted August 29, 2016

[Patent Literature]

[PTL 1]
Japanese Patent Laid-open No. 2001-313569

[Summary]

[Technical Problem]

However, in a case where a reserved word, which is a predetermined value determined beforehand, is contained in data obtained by sensing, there is a possibility that this value changes after decoding by a lossy coding method. In this case, the reserved word may be difficult to be restored to a correct word. In contrast, if a lossless coding method is adopted, code quantity control may become difficult. Accordingly, it has been difficult to achieve code quantity control while securely retaining some of pixel values of sensing data. The method described in PTL 1 gives no consideration to this problem of a reserved word. Accordingly, even with use of this method, it has been difficult to achieve code quantity control while securely retaining some of pixel values of sensing data.

The present disclosure has been developed in consideration of the abovementioned circumstances, and achieves code quantity control while securely retaining some of pixel values of sensing data.

[Solution to Problem]

An information processing device according to one aspect of the present technology includes a data determining unit that determines whether or not each of pixel values of sensing data is a reserved word that is a predetermined value determined beforehand, and generates a flag map that indicates a position of a reserved word pixel that is a pixel having the reserved word as a pixel value and non-reserved word data that includes a pixel value of a non-reserved word pixel that is a pixel other than the reserved word pixel, a flag coding unit that performs lossless coding on the flag map generated by the data determining unit, to generate a flag stream, and a pixel coding unit that codes the non-reserved word data generated by the data determining unit, to generate a pixel stream.

An information processing method according to one aspect of the present technology includes determining whether or not each of pixel values of sensing data is a reserved word that is a predetermined value determined beforehand, and generating a flag map that indicates a position of a reserved word pixel that is a pixel having the reserved word as a pixel value, and non-reserved word data that includes a pixel value of a non-reserved word pixel that is a pixel other than the reserved word pixel, performing lossless coding on the generated flag map to generate a flag stream, and coding the generated non-reserved word data to generate a pixel stream.

An information processing device according to a different aspect of the present technology includes a flag decoding unit that performs lossless decoding on a flag stream contained in a sensing stream, to generate a flag map that indicates a position of a reserved word pixel that is a pixel having a reserved word that is a predetermined value determined beforehand, as a pixel value, a pixel decoding unit that decodes a pixel stream that is coded data of non-reserved word data being contained in the sensing stream and including a pixel value of a non-reserved word pixel that is a pixel other than the reserved word pixel, to generate a pixel map containing the non-reserved word data, and a data combining unit that combines the flag map generated by the flag decoding unit and the pixel map generated by the pixel decoding unit, to generate sensing data.

An information processing method according to a different aspect of the present technology includes performing lossless decoding on a flag stream contained in a sensing stream, to generate a flag map that indicates a position of a reserved word pixel that is a pixel having a reserved word that is a predetermined value determined beforehand as a pixel value, decoding a pixel stream that is coded data of non-reserved word data being contained in the sensing stream and including a pixel value of a non-reserved word pixel that is a pixel other than the reserved word pixel, to generate a pixel map containing the non-reserved word data, and combining the generated flag map and the generated pixel map to generate sensing data.

According to the information processing device and the information processing method of the one aspect of the present technology, whether or not each of pixel values of sensing data is a reserved word that is a predetermined value determined beforehand is determined, and a flag map that indicates a position of a reserved word pixel that is a pixel having the reserved word as a pixel value and non-reserved word data that includes a pixel value of a non-reserved word pixel that is a pixel other than the reserved word pixel are generated. The generated flag map is subjected to lossless coding to generate a flag stream. The generated non-reserved word data is coded to generate a pixel stream.

According to the information processing device and the information processing method of the different aspect of the present technology, a flag stream contained in a sensing stream is subjected to lossless decoding to generate a flag map that indicates a position of a reserved word pixel that is a pixel having a reserved word that is a predetermined value determined beforehand, as a pixel value. A pixel stream that is coded data of non-reserved word data being contained in the sensing stream and including a pixel value of a non-reserved word pixel that is a pixel other than the reserved word pixel is decoded to generate a pixel map containing the non-reserved word data. The generated flag map and the generated pixel map are combined to generate sensing data.

[Brief Description of Drawings]

[FIG. 1]

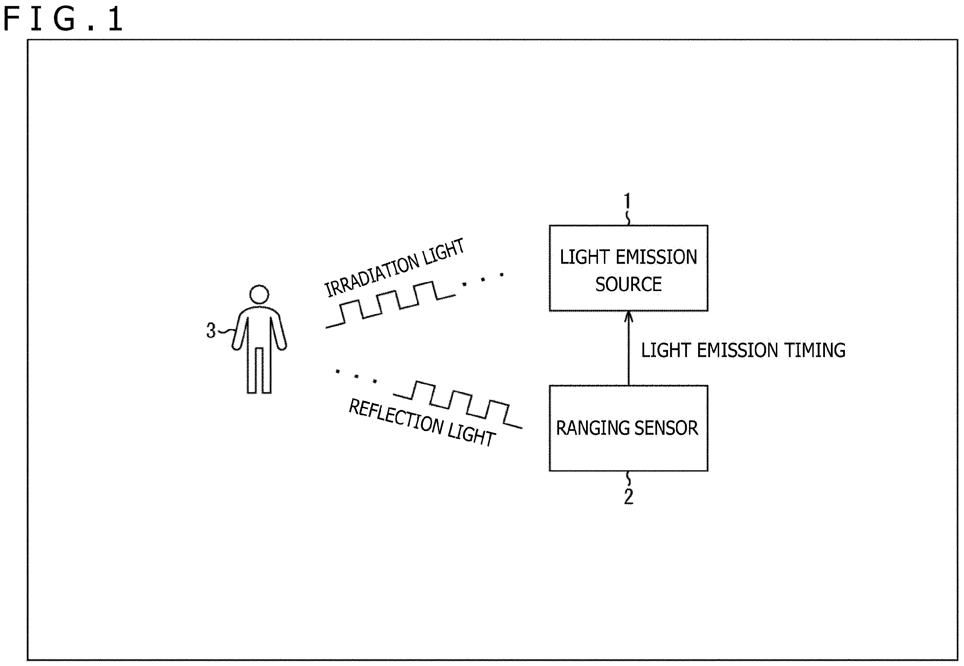

FIG. 1 is a diagram explaining an example of a state of distance measurement by an indirect ToF method.
[FIG. 2]

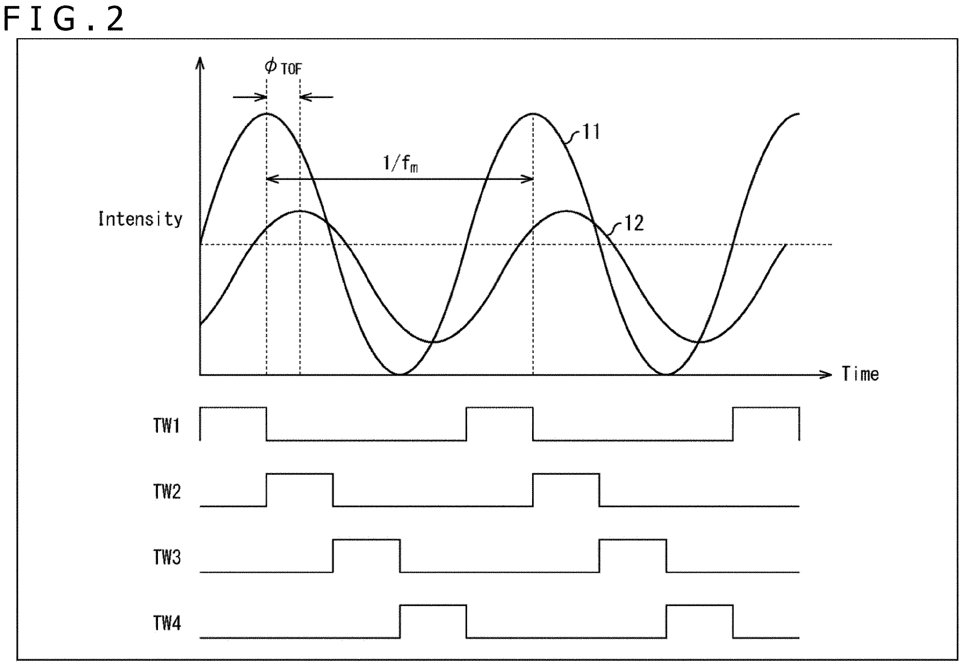

FIG. 2 is a diagram explaining an example of a state of distance measurement by the indirect ToF method.
[FIG. 3]

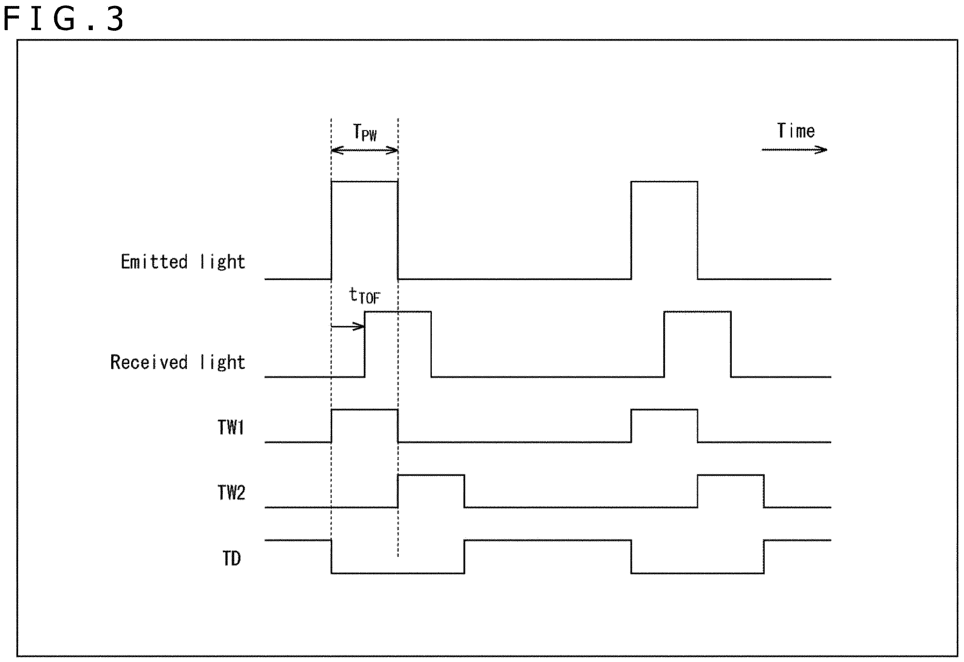

FIG. 3 is a diagram explaining an example of a state of distance measurement by the indirect ToF method.
[FIG. 4]

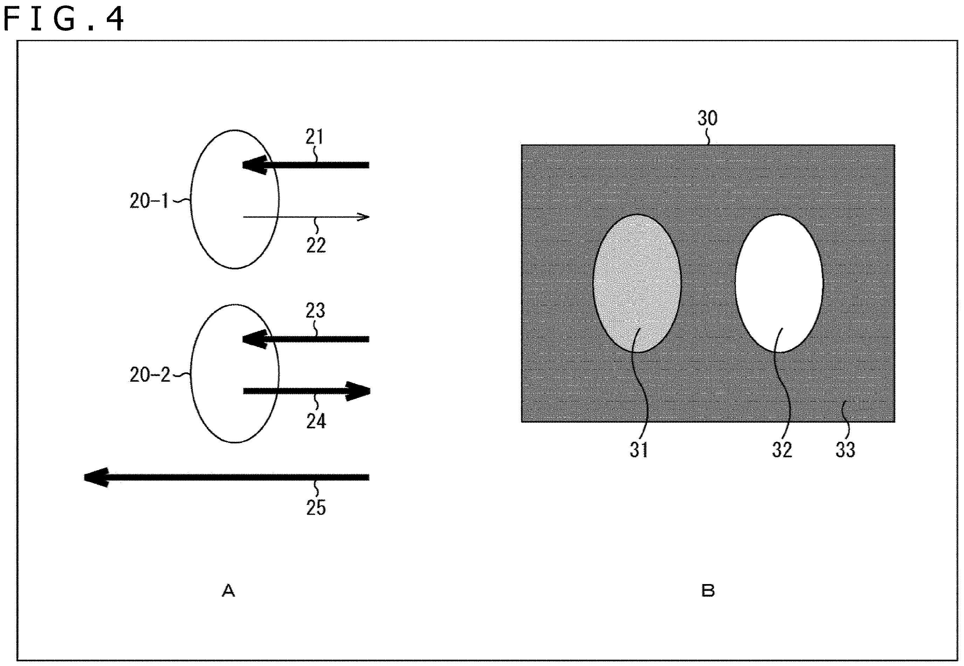

FIG. 4 depicts diagrams explaining an example of sensing data.
[FIG. 5]

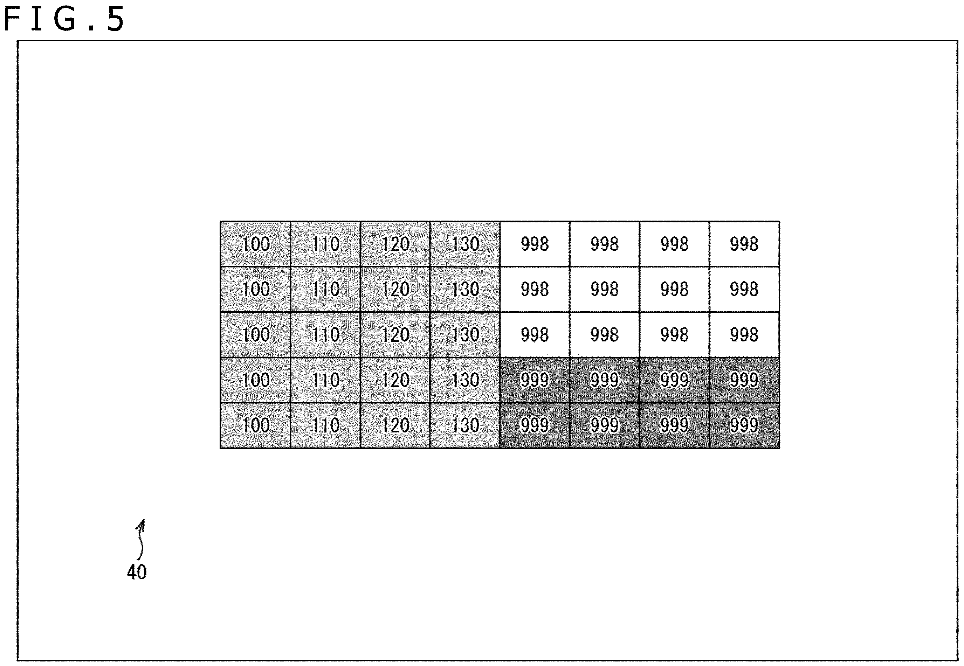

FIG. 5 is a diagram explaining an example of sensing data.
[FIG. 6]

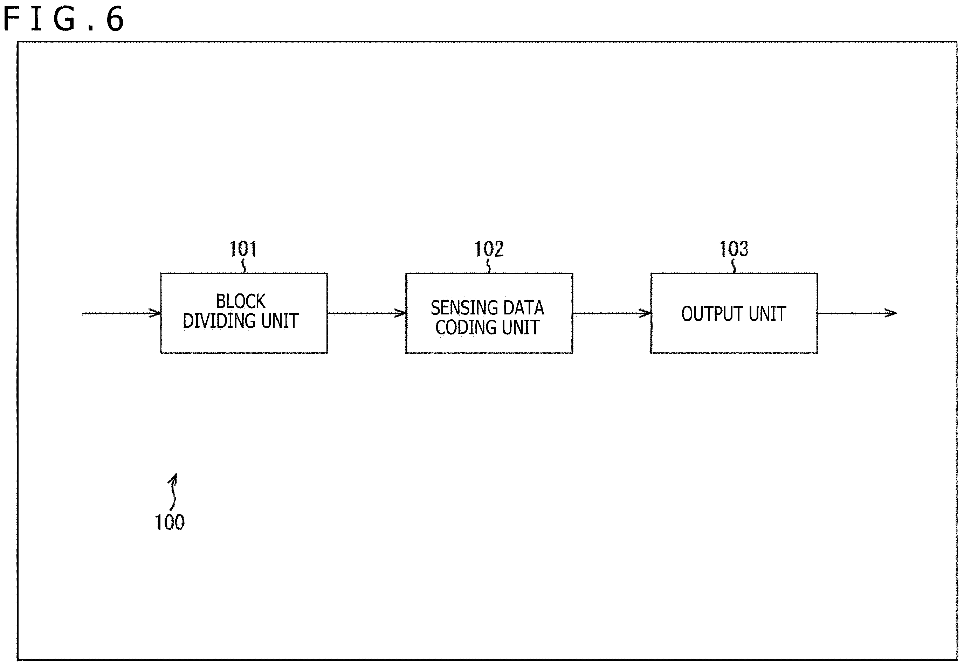

FIG. 6 is a block diagram depicting an example of a main configuration of a coding device.
[FIG. 7]

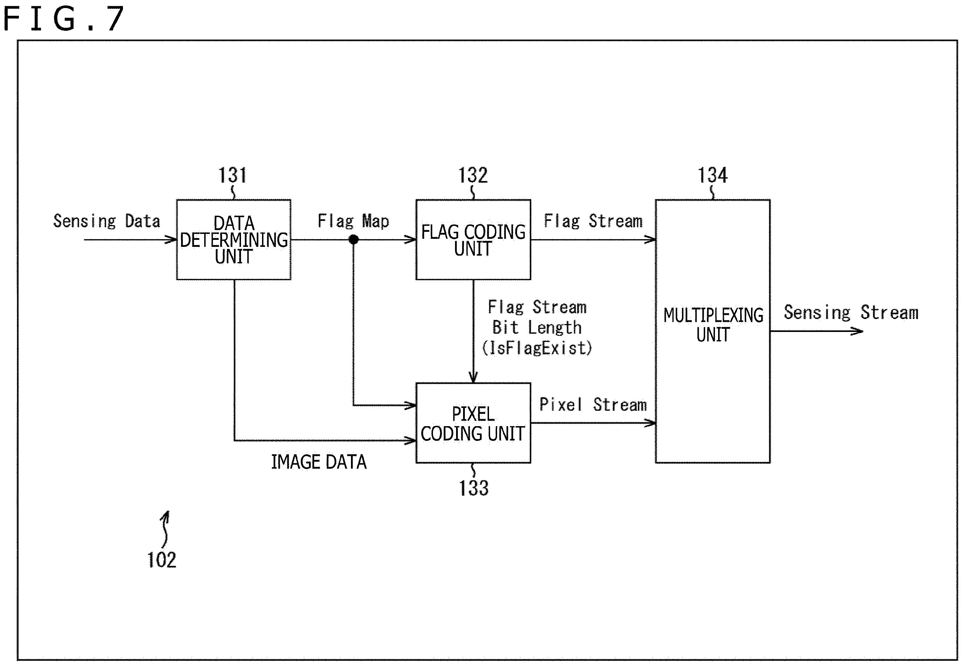

FIG. 7 is a block diagram depicting an example of a main configuration of a sensing data coding unit.
[FIG. 8]

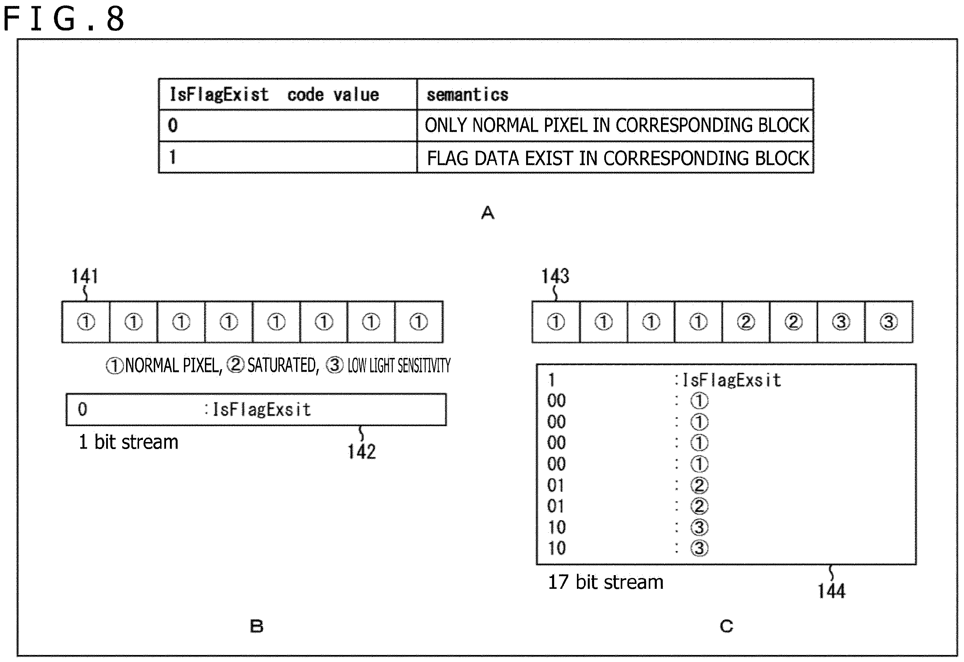

FIG. 8 depicts diagrams explaining a flag stream.
[FIG. 9]

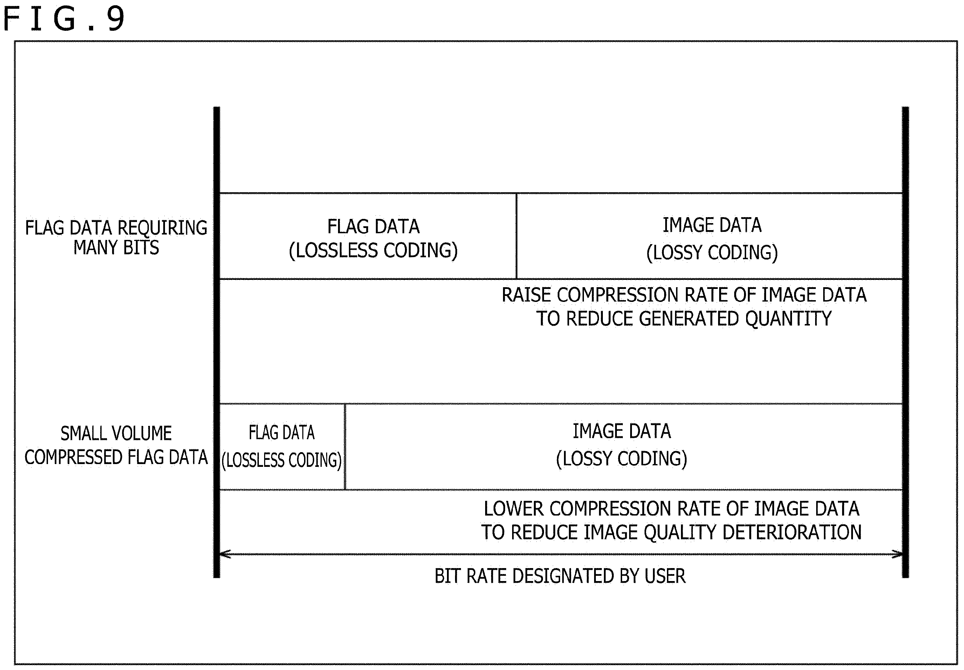

FIG. 9 is a diagram depicting an example of a sensing stream.
[FIG. 10]

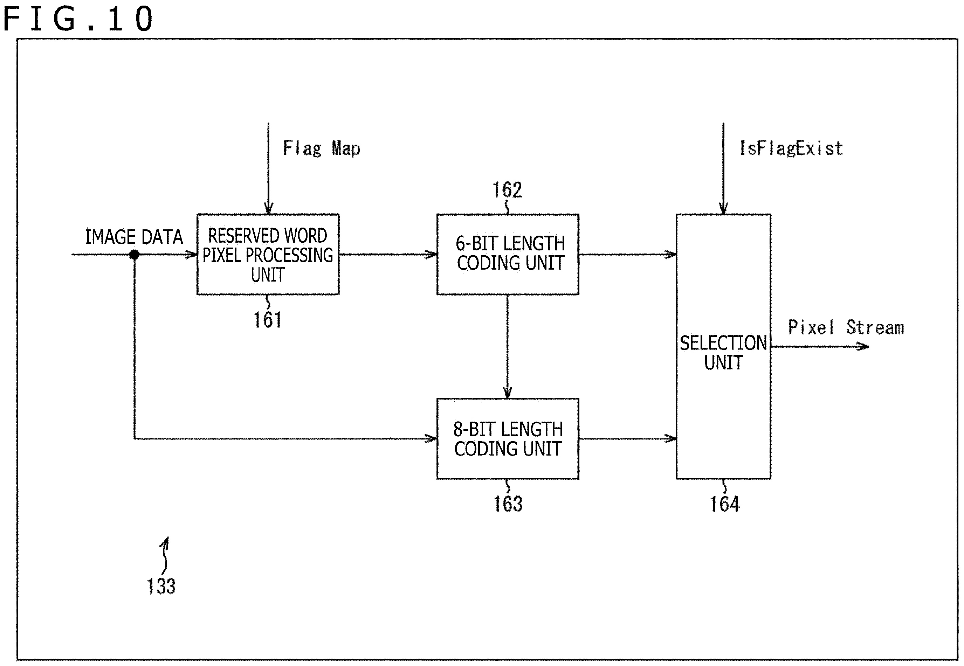

FIG. 10 is a block diagram depicting an example of a main configuration of a pixel coding unit.
[FIG. 11]

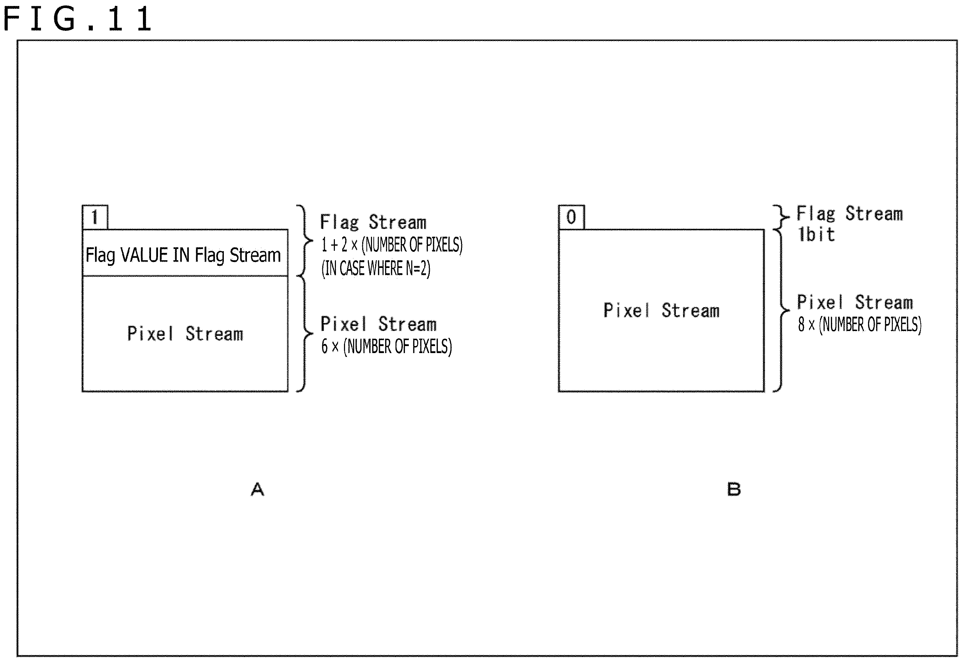

FIG. 11 illustrates diagrams depicting an example of a sensing stream.

[FIG. 12]

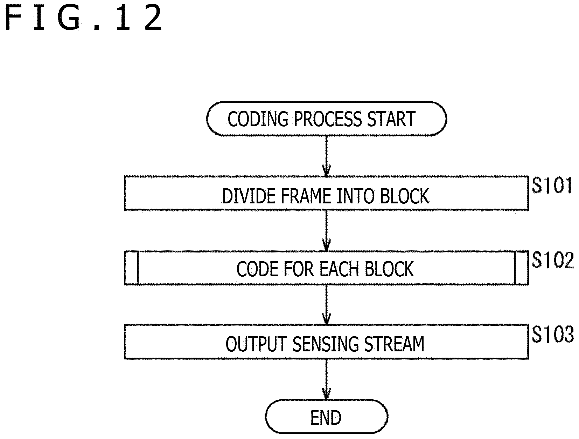

FIG. 12 is a flowchart illustrating an example of a flow of a coding process.

[FIG. 13]

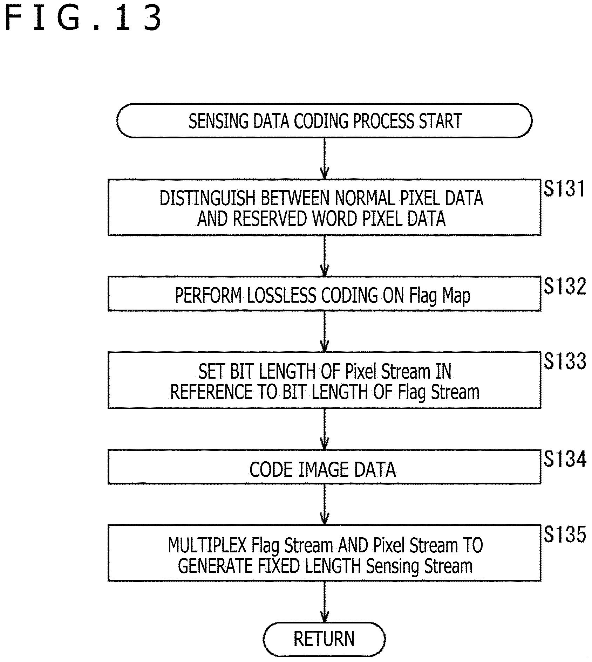

FIG. 13 is a flowchart illustrating an example of a flow of a sensing data coding process.

[FIG. 14]

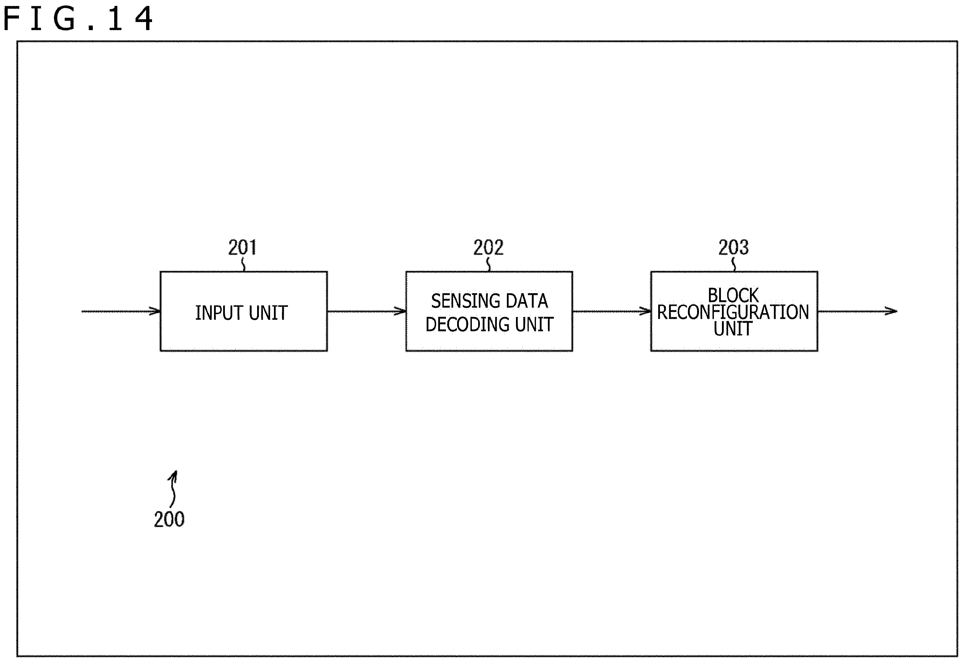

FIG. 14 is a block diagram depicting an example of a main configuration of a decoding device.

[FIG. 15]

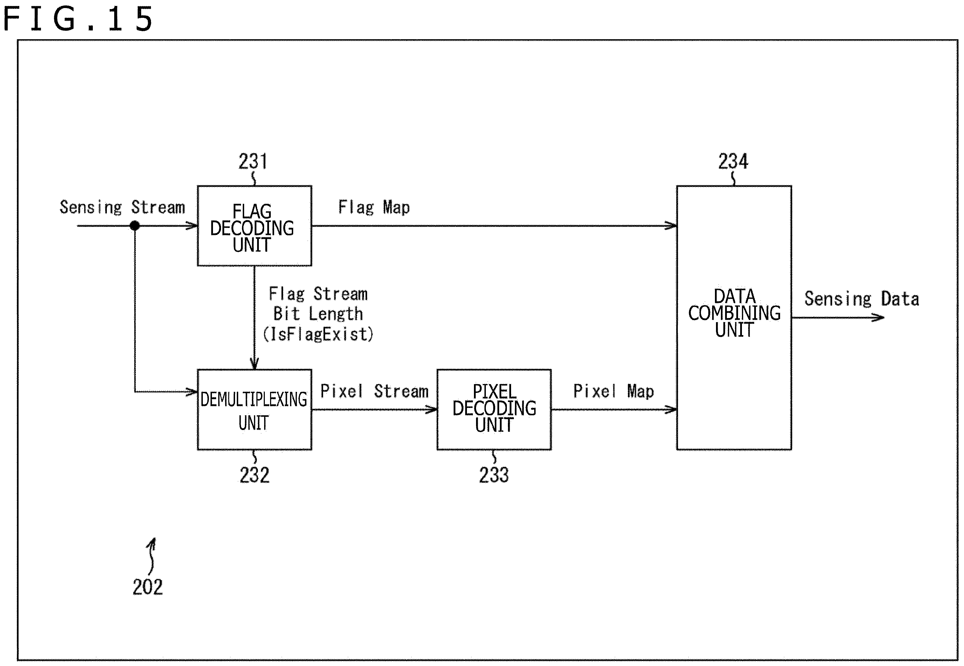

FIG. 15 is a block diagram depicting an example of a main configuration of a sensing data decoding unit.

[FIG. 16]

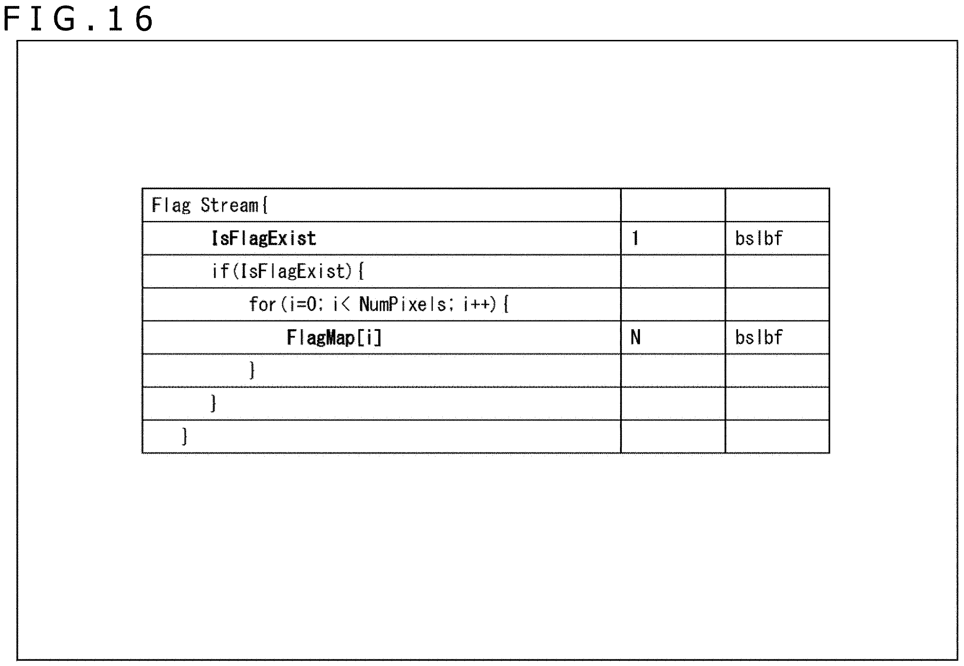

FIG. 16 depicts an example of syntax of a flag stream.

[FIG. 17]

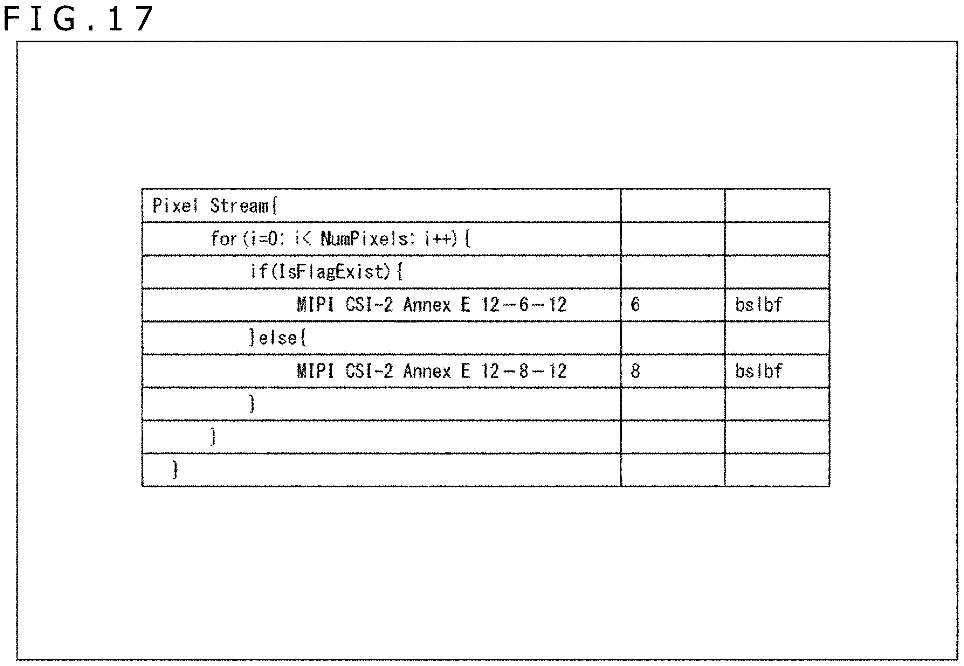

FIG. 17 is a diagram depicting an example of syntax of a pixel stream.

[FIG. 18]

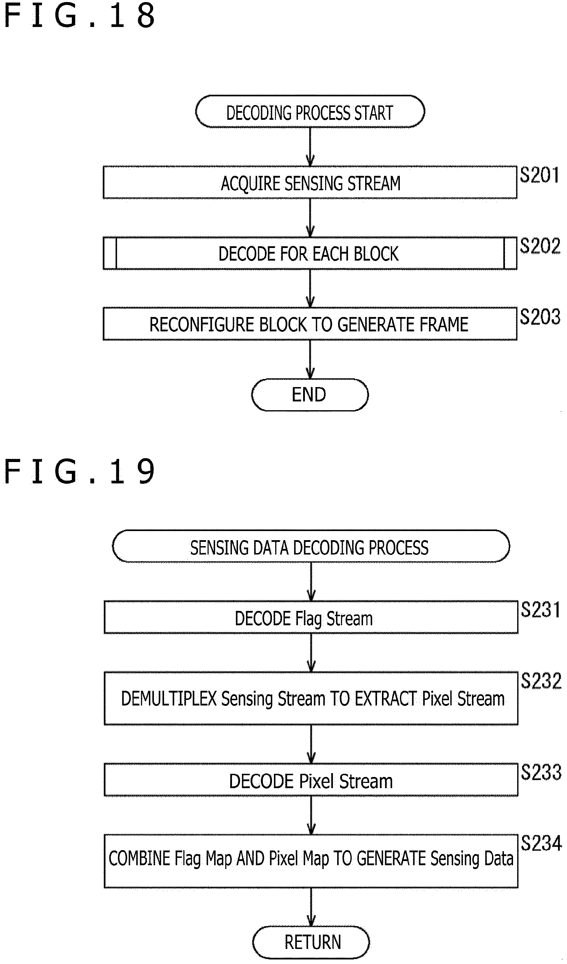

FIG. 18 is a flowchart illustrating an example of a flow of a decoding process.

[FIG. 19]

FIG. 19 is a flowchart illustrating an example of a flow of a sensing data decoding process.

[FIG. 20]

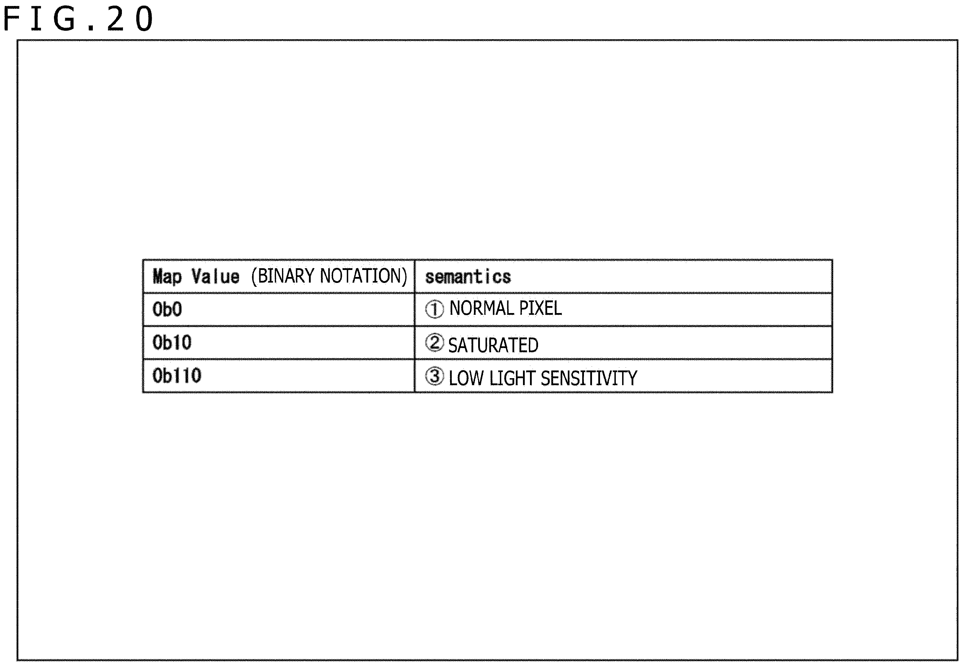

FIG. 20 is a diagram depicting an example of values of a flag map.

[FIG. 21]

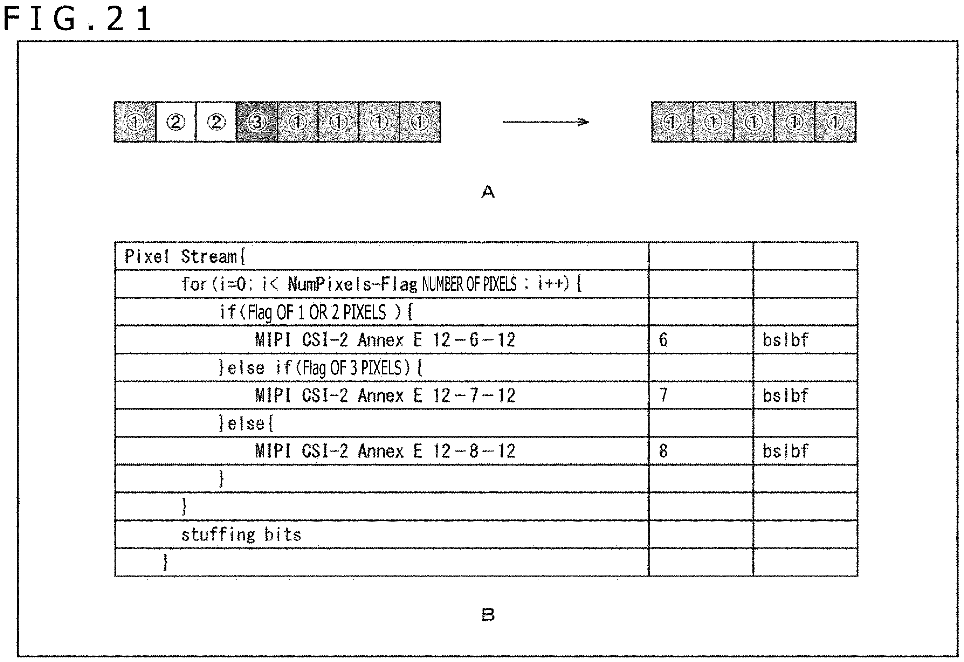

FIG. 21 illustrates diagrams depicting an example of syntax of a pixel stream.

[FIG. 22]

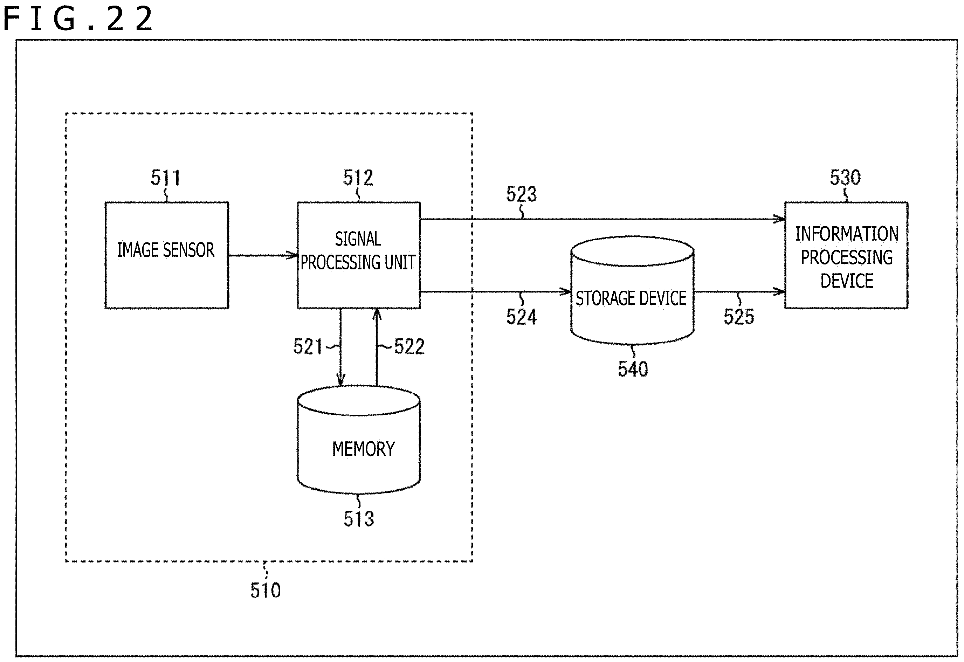

FIG. 22 is a block diagram depicting an example of a main configuration of a detection device.

[FIG. 23]

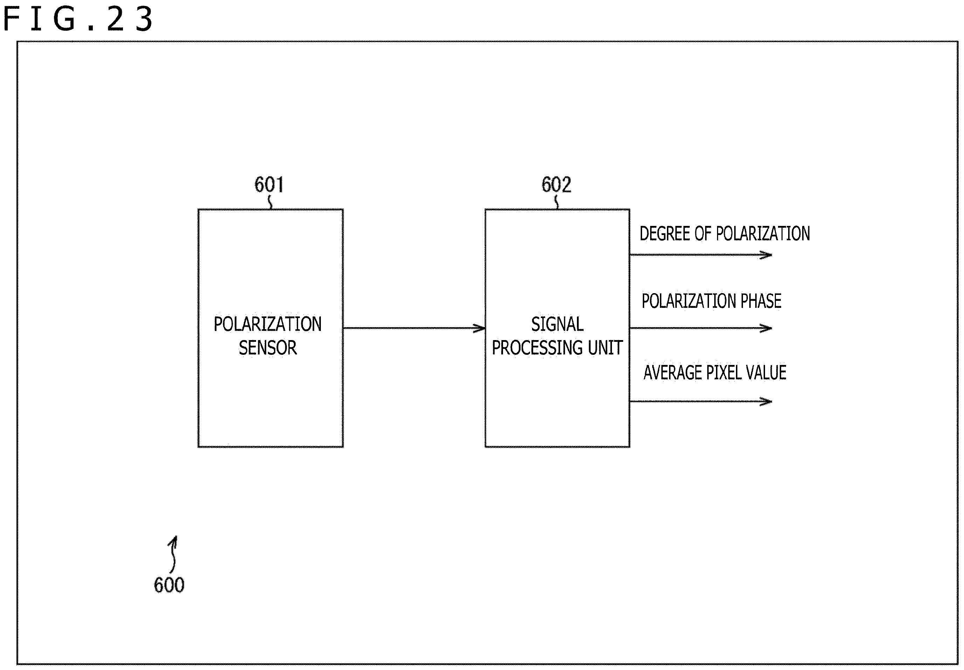

FIG. 23 depicts block diagrams depicting an example of a main configuration of a polarization camera.

[FIG. 24]

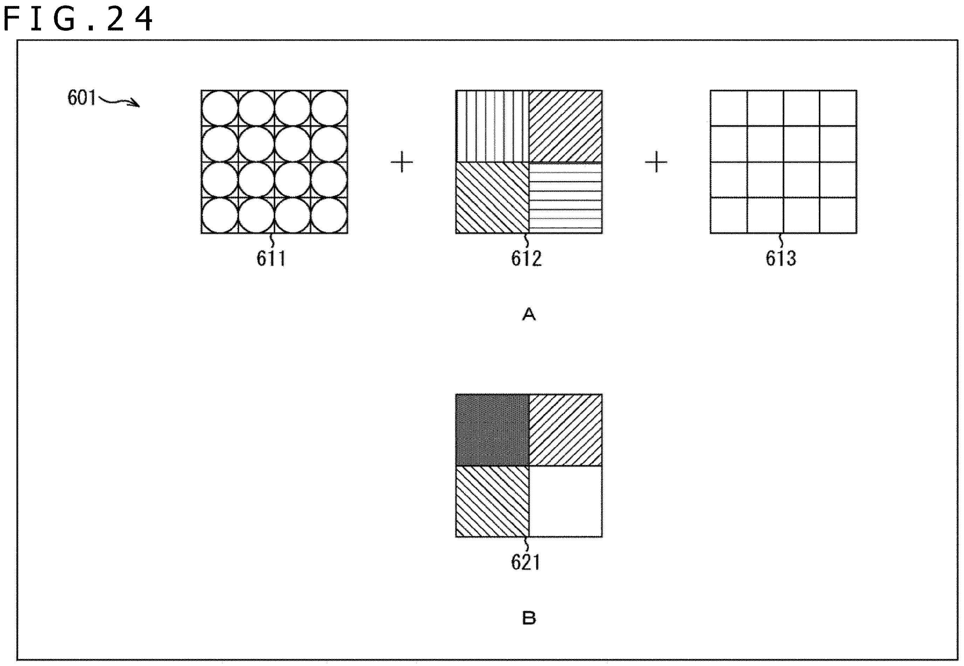

FIG. 24 illustrates diagrams explaining a polarization sensor.

[FIG. 25]

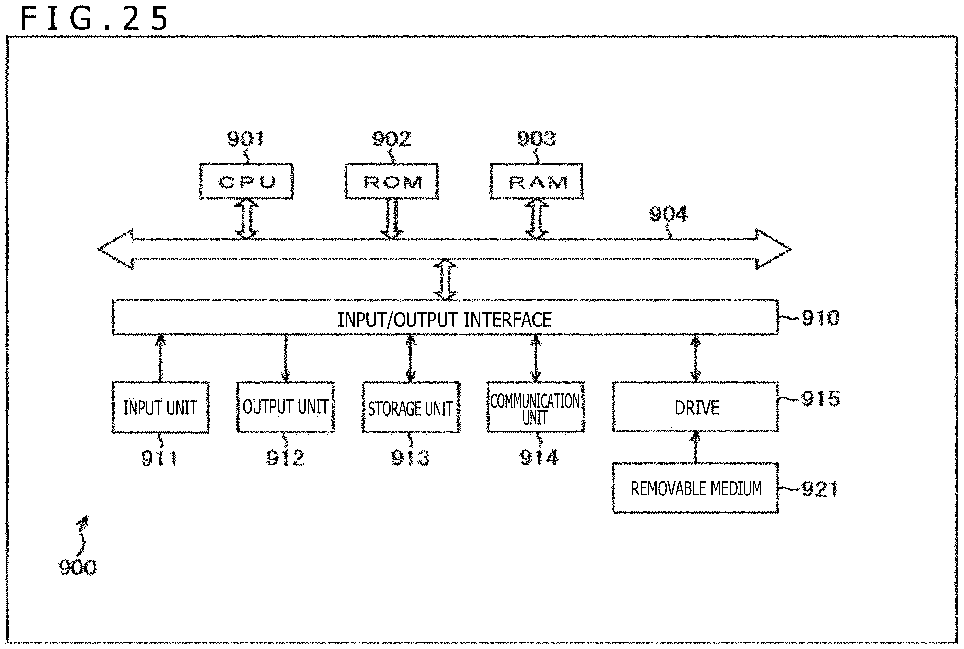

FIG. 25 is a block diagram depicting an example of a main configuration of a computer.

[Description of Embodiments]

Modes for carrying out the present disclosure (hereinafter referred to as embodiments) will hereinafter be described. Note that the description will be presented in the following order.

1. Coding and decoding of sensing data containing reserved word
2. First embodiment (coding device)
3. Second embodiment (decoding device)
4. Application examples
5. Supplementary notes

<1. Coding and decoding of sensing data containing reserved word>

<iToF>

Use of an image sensor for sensing purposes has been increasing in recent years. For example, as described in NPL 1, there has been developed a technology which measures a distance from a target object by detecting a phase difference between a sine wave and a reflected wave applied from a light source.

For example, as depicted in FIG. 1, there has been developed ToF (Time-of-Flight) which applies light (for example, infrared light) to a subject 3 from a light emission source 1, measures a length of time required for reflection light of the applied light to be received by a ranging sensor 2, and calculates a distance to the subject 3 in reference to the measured length of time. Moreover, as methods for practicing this ToF, there have been devised a direct ToF method (also called dToF (direct Time of Flight)) and an indirect ToF method (also called iToF (indirect Time of Flight).

The direct ToF method uses a TDC (Time-to-Digital Converter). Accordingly, pixel multiplication is difficult to achieve by this method. The indirect ToF method does not require a time calculation circuit such as a TDC to be provided within pixels, and is hence capable of reducing an increase in the number of elements within pixels. Accordingly, multiplication of pixels is easily achievable.

The indirect ToF method modulates photocharge generated at a photodiode, by lock-in pixel modulation with use of a time window (clock) synchronized with a light source. At the time of this modulation, time information is reflected in a signal quantity. Accordingly, a flight time can be calculated in reference to the time information.

For example, a method for modulation adopted in the indirect ToF method includes continuous wave modulation and pulse wave modulation.

FIG. 2 depicts an example of a state of continuous wave modulation. In a graph presented in FIG. 2, a sine wave 11 represents emitted light (Emitted), while a sine wave 12 represents reflection light (Received). As depicted in FIG. 2, in the case of continuous wave modulation, a phase difference between emitted light and reflected light can be derived by lock-in detection using four time windows. The lock-in detection performed here refers to an action for accumulating signals in the same phase multiple times by using a short electronic shutter synchronized with a light source. In a case of modulation using a sine wave, a phase difference $\varphi_{TOF}$ is derived with use of the following Equation (1) according to signals $A_0$, $A_1$, $A_2$, and $A_3$ accumulated by four time windows TW1, TW2, TW3, and TW4.

$$\phi_{TOF} = \frac{1}{2\pi f_m} \tan^{-1}\left(\frac{A_3 - A_1}{A_2 - A_0}\right)$$

$$\cdot \cdot \cdot \quad (1)$$

A modulation frequency $f_m$ is known. Accordingly, the phase ($\varphi_{TOF}$) can be converted into a time ($t_{TOF}$) by the following equation (2).

$$t_{TOF} = \frac{\phi_{TOF}}{2\pi f_m}$$

$$\cdot \cdot \cdot \quad (2)$$

Note that the received light contains a direct current component other than light from the light source, i.e., a background light component. This background light component is cancelled by calculation of Equation (1) described above. Accordingly, a distance can be estimated without effect of background light in a range where the sensor is not saturated.

Meanwhile, FIG. 3 depicts an example of a state of pulse wave modulation. In the case of pulse wave modulation, a flight time $t_{TOF}$ is calculated by the following Equation (3) on assumption that signals accumulated by TW1 and TW2 are $A_0$ and $A_1$.

$$t_{TOF} = \frac{N_2}{N_1 + N_2} T_0$$

$$\cdot \cdot \cdot \quad (3)$$

In the figure, TD represents a discharge window from which unnecessary background light is discharged. By providing three or more time windows TW, only the background light component is recognizable, making it possible to estimate a distance without effect of background light. Pulse wave modulation achieves robust imaging for background light by setting a high duty ratio of the light source.

<Sensing data>

Note that there exist pixels saturated with light, pixels unable to receive light, or other pixels in the case of actual sensing. Accordingly, depths of some pixels may be difficult to calculate. For example, suppose that light (also referred to as irradiation light) is applied to an object 20-1 and an object 20-2 to detect light reflected on the object 20-1 and the object 20-2 (also referred to as reflection light) with use of an image sensor (not depicted) as depicted in A of FIG. 4. In addition, suppose that reflectance of the object 20-2 is considerably higher than that of the object 20-1. Each of the object 20-1 and the object 20-2 will be referred to as an object 20 in a case where no distinction therebetween is needed in the description. If a light quantity of the reflection light lies within an allowable range of the image sensor in such a case, this light is indicated as a correct pixel value. However, if the light quantity of the reflection light is excessively large, a pixel value of the image sensor may be saturated in some cases. For example, suppose reflection light 22, which is reflected light of irradiation light 21 on the object 20-1 having low reflectance, has a light quantity which is considerably smaller than that of the irradiation light 21 as a result of attenuation and falls within the allowable range of the image sensor. In such a case, a pixel value of a pixel having received the reflection light 22 in the image sensor is not saturated, and thus indicates a correct light quantity of the reflection light 22. Meanwhile, suppose reflection light 24, which is reflected light of irradiation light 23 on the object 20-2 having high reflectance, has a light quantity which is not relatively smaller than that of the irradiation light 23 as a result of attenuation and exceeds the allowable range of the image sensor. In such a case, a pixel value of a pixel having received the reflection light 24 in the image sensor is saturated, and hence unable to indicate a correct light quantity of the reflection light 24. Furthermore, suppose that irradiation light 25 deviates from the objects 20 and does not reflect on the objects 20. In such a case, detection of reflection light is difficult for the image sensor.

As a result of such a phenomenon, the image sensor detects image data 30 (i.e., obtains data by sensing) depicted in B of FIG. 4, for example. Specifically, a pixel value of a region 31 (light gray portion) corresponding to the object 20-1 in the image data 30 indicates correct intensity of the reflection light. On the other hand, a pixel value of a region 32 (white portion) corresponding to the object 20-2 is saturated (what is generally called blown out highlight), and does not indicate correct intensity of the reflection light. In addition, a pixel value of a region 33 (dark gray portion) other than these regions is substantially zero. Accordingly, a correct distance to the object 20 can be obtained only in the portion corresponding to the region 31 in this image data.

For overcoming this problem, there has been developed such an idea which sets a reserved word determined beforehand for a pixel which has a saturated pixel value or has been unable to detect light, as in sensing data 40 depicted in FIG. 5, to indicate a light reception state of the corresponding pixel. In the case of the example in FIG. 5, detected pixel values are set without change for pixels in a light gray region in a left part of the sensing data 40. On the other hand, a reserved word "998" is set for each of pixels in a white region in an upper right part. In addition, a reserved word "999" is set for each of pixels in a dark gray region in a lower right part. The reserved word "998" indicates that the pixel value is saturated (e.g., has reached a maximum value), while the reserved word "999" indicates that the pixel is unable to receive light (e.g., the pixel value is substantially zero). In other words, any meaningless pixel values are set also for the pixels that have saturated pixel values or have been unable to receive light at the time of detection of light by the image sensor. These pixel values are replaced with predetermined reserved words.

In such a manner, pixels corresponding to reserved words can easily be ignored at the time of distance calculation. Specifically, pixels each having a saturated pixel value and pixels unable to receive light, i.e., pixels for each of which a correct distance is difficult to calculate, can easily be ignored at the time of distance calculation. Accordingly, an increase in the number of unnecessary processes is avoidable. Moreover, such replacement can reduce a code quantity generated at the time of coding of sensing data. For example, a value lower than a limit value of the image sensor set as a hardware limit value may be designated as a "saturated pixel value" to deal with errors or the like. In that case, the "saturated pixel value" can be any one of multiple values lower than the limit value. Moreover, the pixel value of the pixel determined to be "unable to receive light" is not required to be "zero," and may be an extremely low pixel value (a value within a predetermined range from zero), for example. In that case, the pixel value of the pixel determined to be "unable to receive light" is any one of multiple extremely low values. Accordingly, the "meaningless pixel values" are variable for each pixel. When sensing data containing these meaningless pixel values is coded, there is a possibility that the generated code quantity increases in association with these variations. These variations of pixel values can be reduced by replacing the meaningless pixel values with reserved words as described above. For example, in the case of the example of the sensing data 40 in FIG. 5, the meaningless pixel values are replaced with two types of reserved words (two types of pixels values). Specifically, in a case where the meaningless pixel values include three or more types of pixel values, the variations of pixel values can be reduced by such replacement. Accordingly, the code quantity generated at the time of coding of sensing data can be reduced.

Note that the arrangement of the respective regions in the example of FIG. 5 is presented only by way of example, and does not correspond to the example of FIG. 4.

<Coding of sensing data>

In the case of using an image sensor for such type of sensing, output from the image sensor is typically combined with post-stage signal processing and processed into desired data before output, rather than being used without change. For example, this post-stage signal processing has been achieved by coding (compressing) data obtained by sensing and outputting the coded data. For example, there is an idea of decreasing an information volume to reduce a bandwidth required when data obtained by sensing is input or output via an interface. Moreover, there is an idea of decreasing an information volume to reduce a storage capacity in a case where data obtained by sensing is stored in a storage medium. Furthermore, there is an idea of decreasing an information volume to reduce a bandwidth used by a communication path (transfer medium) in a case where data obtained by sensing is transferred via the communication path. In the foregoing cases, controllability of the volume of information to a desired value is demanded.

For example, in a case where data obtained by sensing is coded by a lossless method, a length of compressed data is dependent on a length of input data. In other words, an information volume may increase after coding. Accordingly, it is difficult to apply the lossless coding method to the information volume control described above.

On the other hand, in a case where data obtained by sensing is coded by a lossy method, a compression rate is adjustable to any rate. Accordingly, an information volume is easily controllable to a desired volume. However, there is a possibility of a change of pixel values as a result of deterioration caused by coding. Concerning pixel values for which distance measurement is achievable, measurement results (distances) are only variable according to a change of the pixel values. Accordingly, slight deterioration is allowable.

However, in the case of reserved words, each meaning changes according to even a slight change of values. For example, if the reserved word "998" changes to "999" in the sensing data 40 in FIG. 5, the corresponding pixel changes from a "saturated pixel" to a "pixel unable to detect reflection light." Moreover, there is a possibility that a pixel for which a reserved word has been set becomes a pixel for which a reserved word is not set. Furthermore, there is a possibility that a pixel for which a reserved word has not been set becomes a pixel for which a reserved word is set. As described above, when a meaning of a pixel value in sensing data changes, a problem may be caused in image processing or the like which uses this sensing data.

Accordingly, it is difficult to apply the lossy coding method to the information volume control described above. Specifically, even in a case where data obtained by sensing is coded by either the lossless method or the lossy method, it has been difficult to achieve code quantity control while securely retaining some of pixel values of sensing data.

For example, PTL 1 adopts the method which selects any color in a map image, separates data into an interpolation color file and a selection color flag file, and separately compresses these files. However, if the files are separated as in this method, both processing and a data volume may increase. Accordingly, it is difficult to apply this method to the information volume control as described above. Moreover, PTL 1 gives no consideration to a reserved word, and does not disclose a method for identifying a reserved word contained in sensing data and performing processing separately from other pixel values. Accordingly, even with use of the method described in PTL 1, it is difficult to achieve code quantity control while securely retaining some of pixel values of sensing data.

<Coding control for each of reserved word and non-reserved word>

Accordingly, whether or not each pixel value of sensing data is a reserved word is determined, and information associated with the reserved word is coded by the lossless method.

For example, performed by an information processing method are determining whether or not each of pixel values of sensing data is a reserved word that is a predetermined value determined beforehand, generating a flag map that indicates a position of a reserved word pixel that is a pixel having the reserved word as a pixel value and non-reserved word data that includes a pixel value of a non-reserved word pixel that is a pixel other than the reserved word pixel, performing lossless coding on the flag map to generate a flag stream, and coding the non-reserved word data to generate a pixel stream.

For example, an information processing device includes a data determining unit that determines whether or not each of pixel values of sensing data is a reserved word that is a predetermined value determined beforehand, and generates a flag map that indicates a position of a reserved word pixel that is a pixel having the reserved word as a pixel value and non-reserved word data that includes a pixel value of a non-reserved word pixel that is a pixel other than the reserved word pixel, a flag coding unit that performs lossless coding on the flag map generated by the data determining unit, to generate a flag stream, and a pixel coding unit that codes the non-reserved word data generated by the data determining unit, to generate a pixel stream.

For example, performed by an information processing method are performing lossless decoding on a flag stream contained in a sensing stream, to generate a flag map that indicates a position of a reserved word pixel that is a pixel having a reserved word that is a predetermined value determined beforehand, as a pixel value; decoding a pixel stream that is coded data of non-reserved word data being contained in the sensing stream and including a pixel value of a non-reserved word pixel that is a pixel other than the reserved word pixel, to generate a pixel map containing the non-reserved word data, and combining the generated flag map and the generated pixel map to generate sensing data.

For example, an information processing device includes a flag decoding unit that performs lossless decoding on a flag stream contained in a sensing stream, to generate a flag map that indicates a position of a reserved word pixel that is a pixel having a reserved word that is a predetermined value determined beforehand, as a pixel value, a pixel decoding unit that decodes a pixel stream that is coded data of non-reserved word data being contained in the sensing stream and including a pixel value of a non-reserved word pixel that is a pixel other than the reserved word pixel, to generate a pixel map containing the non-reserved word data, and a data combining unit that combines the flag map generated by the flag decoding unit and the pixel map generated by the pixel decoding unit, to generate sensing data.

By using these methods and devices, sensing data can be compressed into a desired information volume of data without reserved words being deteriorated. In other words, a code quantity is controllable while some of pixel values of the sensing data are securely retained.

In this manner, for example, an information volume can be decreased to reduce a bandwidth required when sensing data is input or output via an interface. Moreover, an information volume can be decreased to reduce a storage capacity in a case where sensing data is stored in a storage medium. Furthermore, an information volume can be decreased to reduce a bandwidth used by a communication path (transfer medium) in a case where sensing data is transferred via the communication path.

<2. First embodiment>

<Coding device>

FIG. 6 is a block diagram depicting an example of a configuration of a coding device as one mode of an information processing device to which the present technology is applied. A coding device 100 depicted in FIG. 6 is a device which codes sensing data. Note that FIG. 6 depicts only main parts of processing units, data flows, and the like, and does not necessarily present all of units, data flows, and the like. Specifically, the coding device 100 may include a processing unit not depicted as a block in FIG. 6, or processing and a data flow not depicted as an arrow or the like in FIG. 6.

As depicted in FIG. 6, the coding device 100 includes a block dividing unit 101, a sensing data coding unit 102, and an output unit 103.

The block dividing unit 101 acquires sensing data generated by another device. The sensing data is data indicating a detection result obtained by any sensor. For example, the sensing data may be image data detected by an image sensor. It is assumed in the following description that the sensing data is sensing data obtained by an indirect ToF method (iToF) as described with reference to FIGS. 1 to 5. It is assumed that a ToF sensor used in this case to receive reflection light has multiple pixels similarly to an image sensor, and is capable of detecting reflection light for each pixel. For example, an image sensor may be employed as the ToF sensor. Accordingly, sensing data includes detection results (pixel values) obtained by each of the multiple pixels, similarly to image data including multiple pixel values.

The block dividing unit 101 divides the acquired sensing data into coding processing units (also referred to as blocks) processed by the sensing data coding unit 102. The block dividing unit 101 supplies the sensing data for each block to the sensing data coding unit 102.

The sensing data coding unit 102 acquires each block of the sensing data supplied from the block dividing unit 101. The sensing data coding unit 102 codes each block of the acquired sensing data to generate a sensing stream. The sensing data coding unit 102 supplies the generated sensing stream to the output unit 103.

The output unit 103 is an output interface for outputting a sensing stream. The output unit 103 acquires the sensing stream supplied from the sensing data coding unit 102, and outputs the acquired sensing stream to the outside of the coding device 100. For example, this sensing stream is transferred to another information processing device or the like via a communication path, or supplied to a storage medium and stored in the storage medium.

In the coding device 100 thus configured, the present technology is applied to the sensing data coding unit 102. Specifically, as described above in <Coding control for each of reserved word and non-reserved word>, the sensing data coding unit 102 determines whether or not each pixel value of sensing data is a reserved word, and codes information associated with the reserved word by a lossless method. In such a manner, the sensing data can be compressed into a desired information volume of data without the reserved word being deteriorated. In other words, a code quantity is controllable while some of pixel values of the sensing data are securely retained.

<Sensing data coding unit>

FIG. 7 is a block diagram depicting an example of a main configuration of the sensing data coding unit 102 in FIG. 6. Note that FIG. 7 depicts only main parts of processing units, data flows, and the like, and does not necessarily present all of units, data flows, and the like. Specifically, the sensing data coding unit 102 may include a processing unit not depicted as a block in FIG. 7, or processing and a data flow not depicted as an arrow or the like in FIG. 7.

As depicted in FIG. 7, the sensing data coding unit 102 includes a data determining unit 131, a flag coding unit 132, a pixel coding unit 133, and a multiplexing unit 134.

The data determining unit 131 acquires each block of sensing data (Sensing Data) supplied from the block dividing unit 101. The data determining unit 131 separates the acquired sensing data into data to be subjected to lossless coding (data to be compressed as lossless data) and data to be subjected to lossy coding (data to be compressed as lossy data). Specifically, the data determining unit 131 refers to each pixel value of the sensing data, and determines whether or not each pixel value is a reserved word which is a predetermined value determined beforehand.

Thereafter, in reference to a result of this determination, the data determining unit 131 generates a flag map (Flag Map) indicating positions of reserved word pixels which are pixels each having a reserved word as a pixel value. The flag map is array data including indexes (identification information) each indicating whether or not a corresponding pixel is a reserved word pixel (and which reserved word the reserved word pixel corresponds to in a case where multiple reserved words are present). The number of array elements corresponds to the number of processed pixels NumPixels. Each of the array elements indicates whether the pixel located at the same position is a normal pixel or an invalid flag. Note that N is represented by the following Equation (4).

$$N = \text{ceil} \ (\log_2 \ (\text{pixel type}))     (4)$$

Moreover, the data determining unit 131 generates image data, which is remaining data of the sensing data from which pixel values of reserved word pixels are excluded, in reference to the result of the determination. In other words, this image data includes pixel values of non-reserved word pixels, which are pixels other than reserved word pixels. Accordingly, this image data will also be referred to as non-reserved word data.

The data determining unit 131 supplies the generated flag map to the flag coding unit 132 and the pixel coding unit 133. The data determining unit 131 supplies the generated image data (non-reserved word data) to the pixel coding unit 133.

The flag coding unit 132 acquires the flag map supplied from the data determining unit 131. The flag coding unit 132 codes the acquired flag map by a lossless method to generate a flag stream (Flag Stream). This coding method may be any type of lossless method.

For example, the flag coding unit 132 may give this flag stream flag information IsflagExist which indicates whether or not the flag map contains the reserved word pixel. The flag information IsFlagExist is flag information generated for each block, and indicates whether or not the corresponding block (processing target block) contains the reserved word pixel. In FIG. 8, A depicts an example of semantics of the flag information IsFlagExist. The flag information IsFlagExist which has a true value (e.g., "1") indicates that the processing target block contains the reserved word pixel. The flag information IsFlagExist which has a false value (e.g., "0") indicates that the processing target block does not contain the reserved word pixel, i.e., contains only the non-reserved word pixel.

In a case where the flag information IsFlagExist is false, the flag coding unit 132 generates a flag stream including only this flag information IsFlagExist. For example, suppose that a flag map 141 includes only indexes (each given circled numeral "1" in the figure) each indicating a normal pixel (non-reserved word pixel) as depicted in B of FIG. 8. In this case, the flag coding unit 132 generates a flag stream 142 including only the flag information IsFlagExist. The flag stream 142 has a code length of 1 bit (value: "0").

On the other hand, in a case where the flag information IsFlagExist is true, the flag coding unit 132 generates a flag stream including this flag information IsFlagExist and the flag map. For example, suppose that a flag map 143 includes indexes (each given enclosed numeral "2" or "3" in the figure) each indicating the reserved word pixel as depicted in C of FIG. 8. In this case, the flag coding unit 132 generates a flag stream 144 including the flag information IsFlagExist and the flag map. The flag map contains 8 pixels for information. Accordingly, if each index includes 2 bits, the flag stream 144 has a code length of 17 bits (1 bit of IsFlagExist + 2 bits × 8 pixels).

In the case of the example in FIG. 8, each of the indexes of the flag map identifies any one of three states, i.e., a normal pixel, a saturate pixel, and a low light sensitivity pixel, and hence includes 2 bits (00, 01, 10). Note that the flag map (the indexes of the flag map) has any bit length. The flag map (the indexes of the flag map) may have a fixed length as depicted in the example of FIG. 8.

Described with reference to FIG. 7 again, the flag coding unit 132 supplies the generated flag stream to the multiplexing unit 134. In addition, the flag coding unit 132 supplies information indicating a bit length (code quantity) of the flag stream (Flag Stream Bit Length) to the pixel coding unit 133.

The pixel coding unit 133 acquires the image data and the flag map supplied from the data determining unit 131. In addition, the pixel coding unit 133 acquires the information that indicates the bit length (code quantity) of the flag stream and that is supplied from the flag coding unit 132.

The pixel coding unit 133 codes the image data in reference to the flag map and the information indicating the bit length (code quantity) of the flag stream, to generate a pixel stream (Pixel Stream). Specifically, the pixel coding unit 133 codes only pixel values of non-reserved word pixels in pixel values of the sensing data.

This bit length (code length) of the sensing stream may be a fixed length.

In that case, the pixel coding unit 133 may generate a pixel stream which has a bit length (code length) corresponding to a difference between the fixed bit length (code length) of the sensing stream and the bit length (code length) of the flag stream.

For example, as depicted in FIG. 9, the code length of the sensing stream including the flag stream and the pixel stream is fixed to a code length designated by a user. In such a manner, the code length of the sensing stream can be fixed. Accordingly, the code quantity of the desired sensing stream can be set to a desired code quantity. At this time, the pixel stream is so generated as to have a remaining code length after exclusion of the code length of the flag stream that has been subjected to lossless coding. For example, in a case where the flag data requires many bits, the code quantity of the image data (pixel stream) may be decreased. In a case where the flag data is compressed data having a small volume, the code quantity of the image data (pixel stream) may be increased by an amount of the decreased quantity. In such a manner, reversibility of the flag stream can be guaranteed.

In this case, the pixel coding unit 133 may set the code length of the pixel stream in reference to the flag map and the information indicating the bit length (code quantity) of the flag stream. Such a manner of setting allows the pixel coding unit 133 to more easily control the code quantity of the pixel stream.

In addition, the flag coding unit 132 may supply flag information IsFlagExist to the pixel coding unit 133 as information indicating the bit length (code quantity) of the flag stream (Flag Stream Bit Length), and the pixel coding unit 133 may set the bit length (code quantity) of the pixel stream in reference to the flag information IsFlagExist. For example, when the length of the indexes of the flag map is fixed, the code quantity of the flag stream can be determined by the value of the flag information IsFlagExist in a certain case.

In addition, the size of the image data is variable (can be smaller than the size of the sensing data in a certain case) by exclusion of the reserved words. Accordingly, the size of each block processed by the pixel coding unit 133 is variable. This block size may be fixed by a dummy pixel value being inputted to each position of the reserved word pixels. In that case, the pixel coding unit 133 is only required to recognize each position of the reserved word pixels in reference to the flag map, and input a dummy pixel value to each recognized position of the reserved word pixels in the image data.

FIG. 10 is a block diagram depicting an example of a main configuration of the pixel coding unit 133. Note that FIG. 10 depicts only main parts of processing units, data flows, and the like, and does not necessarily present all of units, data flows, and the like. Specifically, the pixel coding unit 133 may include a processing unit not depicted as a block in FIG. 10, or processing and a data flow not depicted as an arrow or the like in FIG. 10.

In the case of the example of FIG. 10, the pixel coding unit 133 includes a reserved word pixel processing unit 161, a 6-bit length coding unit 162, an 8-bit length coding unit 163, and a selection unit 164.

The reserved word pixel processing unit 161 acquires image data supplied from the data determining unit 131. The reserved word pixel processing unit 161 acquires a flag map supplied from the data determining unit 131. The reserved word pixel processing unit 161 performs processing for reserved word pixels in reference to the flag map. For example, the reserved word pixel processing unit 161 inputs a dummy pixel value to each position of the reserved word pixels of the image data in reference to the flag map. The reserved word pixel processing unit 161 supplies the processed image data to the 6-bit length coding unit 162.

The 6-bit length coding unit 162 acquires the image data supplied from the reserved word pixel processing unit 161. The 6-bit length coding unit 162 codes each of pixel values of the acquired image data into a 6-bit length code. Specifically, the 6-bit length coding unit 162 generates a pixel stream having a code quantity of 6 bits $\times$ (number of pixels). The 6-bit length coding unit 162 supplies the generated pixel stream to the selection unit 164.

The 8-bit length coding unit 163 acquires the image data supplied from the data determining unit 131. The 8-bit length coding unit 163 codes each of pixel values of the acquired image data into an 8-bit length code. Specifically, the 8-bit length coding unit 163 generates a pixel stream having a code quantity of 8 bits $\times$ (number of pixels). The 8-bit length coding unit 162 supplies the generated pixel stream to the selection unit 164.

The selection unit 164 acquires the flag information IsFlagExist supplied from the flag coding unit 132. The selection unit 164 acquires the pixel stream supplied from the 6-bit length coding unit 162. The selection unit 164 acquires the pixel stream supplied from the 8-bit length coding unit 163. The selection unit 164 outputs either the pixel stream supplied from the 6-bit length coding unit 162 or the pixel stream supplied from the 8-bit length coding unit 163 (supplies either one of these pixel streams to the multiplexing unit 134) according to the value of the flag information IsFlagExist. Specifically, in a case where the flag information IsFlagExist is true, the selection unit 164 selects the pixel stream supplied from the 6-bit length coding unit 162, and outputs the selected pixel stream. On the other hand, in a case where the flag information IsFlagExist is false, the selection unit 164 selects the pixel stream supplied from the 8-bit length coding unit 163, and outputs the selected pixel stream.

In other words, in the case where the flag information IsFlagExist is true, the image data is processed by the reserved word pixel processing unit 161, and coded by the 6-bit length coding unit 162 to generate a pixel stream. In the case where the flag information IsFlagExist is false, the image data is coded by the 8-bit length coding unit 163 to generate a pixel stream. In such a manner, the code quantity of the pixel stream is controllable according to the value of the flag information IsFlagExist.

Note that the coding method used by the 6-bit length coding unit 162 and the 8-bit length coding unit 163 may be any method. Generally, the code quantity is more reliably controlled by application of a lossy coding method. However, a lossless coding method may be employed as long as the code quantity is reliably adjustable to a desired quantity.

Described with reference to FIG. 7 again, the pixel coding unit 133 supplies the generated pixel stream to the multiplexing unit 134.

The multiplexing unit 134 acquires the flag stream supplied from the flag coding unit 132. The multiplexing unit 134 acquires the pixel stream supplied from the pixel coding unit 133. The multiplexing unit 134 multiplexes the flag stream and the pixel stream to generate a sensing stream (Sensing Stream). The multiplexing unit 134 supplies the generated sensing stream to the output unit 103 (FIG. 6).

FIG. 11 is a diagram depicting an example of a sensing stream in a case where the pixel coding unit 133 performs control in the manner depicted in the example of FIG. 10. In a case where the flag information IsFlagExist is true (e.g., "1"), the sensing stream includes a flag stream containing the flag information IsFlagExist and the flag map and a pixel stream containing 6-bit length codes as depicted in A of FIG. 11. On the other hand, in a case where the flag information IsFlagExist is false (e.g., "0"), the sensing stream includes a flag stream containing the flag information IsFlagExist and a pixel stream containing 8-bit length codes as depicted in B of FIG. 11.

In the case where the flag information IsFlagExist is true (e.g., "1"), the code length of the flag stream becomes larger than that in the case where the flag information IsFlagExist is false (e.g., "0"). Accordingly, in the former case, the image data is coded in such a manner as to decrease the code length of the pixel stream as depicted in A of FIG. 11. In other words, in the case where the flag information IsFlagExist is false (e.g., "0"), the code length of the flag stream becomes smaller than that in the case where the flag information IsFlagExist is true (e.g., "1"). Accordingly, in the former case, the image data is coded in such a manner as to increase the code length of the pixel stream as depicted in B of FIG. 11.

As described above, the flag coding unit 132 codes the flag map by the lossless method. Accordingly, the flag map (the indexes of the flag map) is securely retained. Specifically, the values of the indexes do not change by coding. In addition, as in the example depicted in FIG. 11, the code length of the pixel stream is controllable according to the code length of the flag stream. Accordingly, the coding device 100 is capable of achieving code quantity control while securely retaining some of pixel values of the sensing data.

<Flow of coding process>

An example of a flow of a coding process executed by the coding device 100 will be described with reference to a flowchart in FIG. 12.

In response to a start of the coding process, the block dividing unit 101 of the coding device 100 divides each frame unit of sensing data into block units (coding units) in step S101.

In step S102, the sensing data coding unit 102 executes a sensing data coding process to code each block of the sensing data divided in step S101 and generates a sensing stream.

In step S103, the output unit 103 outputs the sensing stream generated in step S102 to the outside of the coding device 100.

After completion of processing in step S103, the coding process ends.

<Flow of sensing data coding process>

An example of a flow of the sensing data coding process executed in step S102 in FIG. 12 will be described with reference to a flowchart in FIG. 13. Described with reference to FIG. 13 will be a case for generating a sensing stream having a fixed length (a sensing stream having a predetermined code quantity determined beforehand).

In response to a start of the sensing data coding process, the data determining unit 131 of the sensing data coding unit 102 distinguishes between normal pixel data and reserved word pixel data in step S131. Specifically, the data determining unit 131 refers to each pixel value of the sensing data, and determines whether or not each pixel value is a reserved word which is a predetermined value determined beforehand. Thereafter, the data determining unit 131 generates a flag map indicating positions of reserved word pixels which are pixels each having a reserved word as a pixel value, in reference to a result of this determination. Moreover, the data determining unit 131 generates image data, which is remaining data of the sensing data from which pixel values of reserved word pixels are excluded, in reference to the result of the determination.

In step S132, the flag coding unit 132 performs lossless coding on the flag map generated in step S131, to generate a flag stream.

In step S133, the pixel coding unit 133 sets a bit length (code length) of a pixel stream according to a bit length (code length) of the flag stream generated in step S132. For example, the pixel coding unit 133 sets a difference value between the bit length (code length) of the sensing stream and the bit length (code length) of the flag stream, as the bit length (code length) of the pixel stream.

In step S134, the pixel coding unit 133 codes the image data generated in step S131, to generate a pixel stream having the bit length (code length) set in step S133. For example, the pixel coding unit 133 generates the pixel stream having the bit length (code length) set in step S133, by performing lossless coding on the image data.

In step S135, the flag stream generated in step S132 and the pixel stream generated in step S134 are multiplexed to generate a sensing stream having a fixed length.

After completion of processing in step S135, the process returns to FIG. 12.

By executing the respective processes in the manner described above, the coding device 100 achieves code quantity control while securely retaining some of pixel values of the sensing data.

<3. Second embodiment>

<Decoding device>

FIG. 14 is a block diagram depicting an example of a configuration of a decoding device as one mode of an information processing device to which the present technology is applied. A decoding device 200 depicted in FIG. 14 is a device which decodes a sensing stream. For example, the decoding device 200 is capable of generating sensing data by decoding a sensing stream generated by coding of the sensing data with use of the coding device 100 (FIG. 6).

Note that FIG. 14 depicts only main parts of processing units, data flows, and the like, and does not necessarily present all of units, data flows, and the like. Specifically, the decoding device 200 may include a processing unit not depicted as a block in FIG. 14, or processing and a data flow not depicted as an arrow or the like in FIG. 14.

As depicted in FIG. 14, the decoding device 200 includes an input unit 201, a sensing data decoding unit 202, and a block reconfiguration unit 203.

The input unit 201 acquires a sensing stream input to the decoding device 200. This sensing stream is information similar to the corresponding information described in the first embodiment. The input unit 201 supplies the acquired sensing stream to the sensing data decoding unit 202.

The sensing data decoding unit 202 acquires the sensing stream supplied from the input unit 201. The sensing data decoding unit 202 decodes the sensing stream to generate (restore) each block of sensing data. The sensing data decoding unit 202 supplies each block of the generated sensing data to the block reconfiguration unit 203.

The block reconfiguration unit 203 acquires each block of the sensing data supplied from the sensing data decoding unit 202. The block reconfiguration unit 203 reconfigures each block of the sensing data to generate each frame of sensing data. The block reconfiguration unit 203 outputs each frame of the generated sensing data to the outside of the decoding device 200. For example, this sensing data is supplied to a post-stage processing unit and processed.

In the decoding device 200 thus configured, the present technology is applied to the sensing data decoding unit 202. Specifically, as described above in <Coding control for each of reserved word and non-reserved word>, the sensing data decoding unit 202 decodes coded data of information associated with reserved words by a lossless method. In such a manner, coded data obtained by compressing sensing data to a desired volume of information can be correctly decoded without reserved words being deteriorated. In other words, a code quantity is controllable while some of pixel values of the sensing data are securely retained.

<Sensing data coding unit>

FIG. 15 is a block diagram depicting an example of a main configuration of the sensing data decoding unit 202 in FIG. 14. Note that FIG. 15 depicts only main parts of processing units, data flows, and the like, and does not necessarily present all of units, data flows, and the like. Specifically, the sensing data decoding unit 202 may include a processing unit not depicted as a block in FIG. 15, or processing and a data flow not depicted as an arrow or the like in FIG. 15.

As depicted in FIG. 15, the sensing data decoding unit 202 includes a flag decoding unit 231, a demultiplexing unit 232, a pixel decoding unit 233, and a data combining unit 234.

The flag decoding unit 231 acquires a sensing stream supplied from the input unit 201. The flag decoding unit 231 performs lossless decoding on a flag stream contained in this sensing stream, to generate a flag map. This decoding system may be any type of lossless method corresponding to the coding method of the flag stream. For example, the flag decoding unit 231 extracts the flag stream from the sensing stream, and performs lossless decoding on the extracted flag stream.

At this time, the flag decoding unit 231 may generate flag information IsFlagExist by performing lossless decoding on the flag stream, and generate a flag map according to a value of the flag information IsFlagExist. For example, in a case where the sensing stream is configured as depicted in the example of FIG. 11, the flag decoding unit 231 can acquire the flag information IsFlagExist from the head of the flag stream (sensing stream). In a case where the flag information IsFlagExist thus acquired is false, no flag map is contained in the flag stream. Accordingly, the flag decoding unit 231 generates a flag map where all pixels are other than reserved word pixels. On the other hand, in a case where the flag information IsFlagExist is true, a flag map is contained in the flag stream. Accordingly, the flag decoding unit 231 generates the flag map by performing lossless decoding on the flag stream.

FIG. 16 depicts an example of syntax of a flag stream. In a case of this example, if the flag information IsFlagExist is true, elements of a flag map are read from a sensing stream by an amount corresponding to the number of processed pixels NumPixels. If the flag information IsFlagExist is false, this reading from the flag map is not carried out. In that case, the flag decoding unit 231 generates a flag map where all pixels are other than reserved word pixels. Note that the number of processed pixels NumPixels is known in a case where the block size is fixed. Alternatively, the block size may be varied to allow signaling (transfer from the coding side) of the number of processed pixels NumPixels.

Note that this flag map may be information having a fixed length as in the example of FIG. 8 described above in the first embodiment.

Described with reference to FIG. 15 again, the flag decoding unit 231 supplies the generated flag map to the data combining unit 234.

In addition, the flag decoding unit 231 may supply information indicating a bit length (code quantity) of the flag stream (Flag Stream Bit Length) to the demultiplexing unit 232.

The demultiplexing unit 232 acquires a sensing stream supplied from the input unit 201. The demultiplexing unit 232 demultiplexes the sensing stream to extract a pixel stream contained in the sensing stream. For example, the demultiplexing unit 232 skips the bit length (code quantity) of the flag stream from the head of the sensing stream, and extracts data subsequent to this bit length to extract the pixel stream.

The bit length (code length) of the sensing stream may be a fixed length. In this case, the demultiplexing unit 232 may extract, from the sensing stream, a pixel stream having a bit length corresponding to a difference between the fixed bit length of the sensing stream and the bit length of the flag stream.

Moreover, the demultiplexing unit 232 may acquire information indicating the bit length (code quantity) of the flag stream (Flag Stream Bit Length) supplied from the flag decoding unit 231, and demultiplex the sensing stream in reference to this information to extract the pixel stream contained in the sensing stream. For example, the demultiplexing unit 232 may skip the bit length indicated by the acquired information from the head of the sensing stream, and extract data subsequent to this bit length to extract the pixel stream.

Moreover, the flag decoding unit 231 may supply flag information IsFlagExist to the demultiplexing unit 232 as information indicating the bit length (code quantity) of the flag stream. In that case, the demultiplexing unit 232 may acquire the flag information IsFlagExist, and extract the pixel stream from the sensing stream according to a value of the flag information IsFlagExist. For example, the demultiplexing unit 232 may recognize the bit length (code quantity) of the flag stream in reference to the flag information IsFlagExist, skip this bit length from the head of the sensing stream, and extract data subsequent to the bit length to extract the pixel stream.

The demultiplexing unit 232 supplies the pixel stream to the pixel decoding unit 233.

The pixel decoding unit 233 acquires the pixel stream supplied from the demultiplexing unit 232. The pixel decoding unit 233 decodes the pixel stream to generate a pixel map. At this time, the pixel decoding unit 233 applies a decoding method corresponding to the coding method of the pixel stream. For example, if the pixel stream is a stream that has been subjected to lossy coding, the pixel decoding unit 233 performs lossy decoding on the pixel stream. Generally, the code quantity is more reliably controlled by application of a lossy decoding method (coding method) in such a manner. However, a lossless method may be applied as long as the code quantity can reliably be adjusted to a desired quantity. Accordingly, if the pixel stream is a stream that has been subjected to lossless coding, the pixel decoding unit 233 performs lossless decoding on the pixel stream.

FIG. 17 depicts an example of syntax of a pixel stream. For example, in a case where flag information IsFlagExist is true, decoding by MIPI CSI-2 Annex E 12-6-12 is applied. MIPI CSI-2 Annex E 12-6-12 is an example of a 6-bit length decoding method. Suppose in this case that pixel values of respective pixels are coded by a 6-bit length coding method as in the example described in the first embodiment. The pixel decoding unit 233 is capable of correctly decoding a pixel stream by decoding using the 6-bit length decoding method.

On the other hand, in a case where flag information IsFlagExist is false, decoding by MIPI CSI-2 Annex E 12-8-12 is applied. MIPI CSI-2 Annex E 12-8-12 is an example of an 8-bit length decoding method. In this case, suppose that pixel values of respective pixels are coded by an 8-bit length coding method as in the example described in the first embodiment. The pixel decoding unit 233 is capable of correctly decoding a pixel stream by decoding using the 8-bit length decoding method. Needless to say, the decoding method is not limited to the examples described above, and may be any type of method corresponding to the coding method of the pixel stream.

The pixel map is image data in a state where predetermined processing has been completed for positions of reserved word pixels. For example, in a case of a pixel map where dummy pixel values are input to the positions of the reserved word pixels of the image data at the time of coding, this pixel map is image data in a state where the dummy pixel values have been input. In addition, in a case where the image data is coded without change (without the predetermined processing being performed for the positions of the reserved word pixels), this pixel map corresponds to this image data. The pixel decoding unit 233 supplies the pixel map to the data combining unit 234.

The data combining unit 234 acquires the flag map supplied from the flag decoding unit 231. The data combining unit 234 acquires the pixel map supplied from the pixel decoding unit 233. The data combining unit 234 combines the flag map and the pixel map to generate sensing data.

For example, in a case where the pixel map contains the dummy pixel values described above, the data combining unit 234 replaces the respective dummy pixel values in the pixel map with reserved words indicated by indexes corresponding to these pixels in the flag map. On the other hand, in a case where the pixel map does not contain the dummy pixel values described above, the data combining unit 234 inputs reserved words indicated by indexes of the flag map to positions of reserved word pixels in the pixel map in reference to the flag map. The data combining unit 234 generates sensing data containing reserved words in such a manner. Note that the data combining unit 234 designates the pixel map as sensing data in a case where no reserved word is contained in the corresponding block. The data combining unit 234 supplies the sensing data (each block of sensing data) generated in the above manner to the block reconfiguration unit 203.

As described above, the flag decoding unit 231 decodes the flag stream by the lossless method. Accordingly, the flag map (the indexes of the flag map) is securely retained. Specifically, the values of the indexes do not change by decoding. In addition, as in the example depicted in FIG. 11, the code length of the pixel stream is controllable according to the code length of the flag stream. Accordingly, the decoding device 200 is capable of achieving code quantity control while securely retaining some of pixel values of the sensing data.

<Flow of decoding process>

An example of a flow of a decoding process executed by the decoding device 200 will be described with reference to a flowchart in FIG. 18.

In response to a start of the decoding process, the input unit 201 of the decoding device 200 acquires a sensing stream in step S201.

In step S202, the sensing data decoding unit 202 executes a sensing data decoding process to decode the sensing stream for each block and generate sensing data.

In step S203, the block reconfiguration unit 203 reconfigures each block of the sensing data generated in step S202, to generate each frame of sensing data.

After completion of processing in step S203, the decoding process ends.

<Flow of sensing data decoding process>

An example of a flow of the sensing data decoding process executed in step S202 in FIG. 18 will be described with reference to a flowchart in FIG. 19.

In response to a start of the sensing data decoding process, the flag decoding unit 231 extracts a flag stream from a sensing stream and performs lossless decoding on the flag stream to generate a flag map in step S231.

In step S232, the demultiplexing unit 232 demultiplexes the sensing stream to extract a pixel stream.

In step S233, the pixel decoding unit 233 decodes the pixel stream extracted in step S232, to generate a pixel map. For example, the pixel decoding unit 233 generates the pixel map by performing lossy decoding on the pixel stream that has been subjected to lossy coding.

In step S234, the data combining unit 234 combines the flag map generated in step S231 and the pixel map generated in step S233, to generate sensing data.

After completion of processing in step S234, the process returns to FIG. 18.

By executing the respective processes in the manner described above, the decoding device 200 achieves code quantity control while securely retaining some of pixel values of the sensing data.

<4. Application examples>

<Variable-length map flag>

The flag map (the indexes of the flag map) may be variablelength information. For example, the flag map may present variablelength codes whose lengths are variable according to frequencies of appearance. FIG. 20 depicts an example of semantics of the flag map. In a case of this example, an index representing a normal pixel may be "0," an index representing saturation of a pixel value may be "10," and an index representing low light sensitivity may be "110." Coding efficiency improves by varying lengths of codes according to frequencies of appearance in the manner described above.

<Other examples of pixel stream>

In addition, transfer of information associated with reserved word pixels via a pixel stream may be prohibited.

In this case, a code quantity allocated to each pixel value may be controlled according to the number of the reserved word pixels.

For example, suppose that 3 pixels contained in 8 pixels are reserved word pixels as depicted in a left part of A of FIG. 21. In that case, only information associated with 5 pixels as non-reserved word pixels is coded as depicted in a right part of the figure. In this case, therefore, the number of pixels to be coded decreases as the number of reserved word pixels contained in a block increases. Accordingly, a code quantity allocated to each pixel is increased by an amount corresponding to the decreased pixels to be coded.

Syntax in this case is depicted in B of FIG. 21. In the case of this example, 6-bit length coding is applied in a case where 1 pixel or 2 pixels are reserved word pixels, 7-bit length coding is applied in a case where 3 pixels are reserved word pixels, and 8-bit length coding is applied in a case where 4 or more pixels are reserved word pixels. In such a manner, deterioration caused by coding of non-reserved word pixel values can be reduced.

<Application example 1>

The present technology described above is applicable to any configuration. For example, each of the coding device 100 and the decoding device 200 described above is applicable to any device or system.

FIG. 22 is a block diagram depicting an example of a main configuration of a detection device or the like. A detection device 510 depicted in FIG. 22 is a device for acquiring image data by using an image sensor 511, for example, and functions as an imaging device or a ToF sensor. The detection device 510 includes the image sensor 511, a signal processing unit 512, and a memory 513. The image sensor 511 supplies image data to the signal processing unit 512 as sensing data.

The signal processing unit 512 performs signal processing for image data supplied from the image sensor 511. During this processing, the signal processing unit 512 may retain the image data by using the memory 513 as necessary. In other words, the signal processing unit 512 may supply the image data to the memory 513 via a bus 521, and retain the image data in the memory 513. Moreover, the signal processing unit 512 may read the image data retained in the memory 513 via a bus 522. For example, the signal processing unit 512 may read the image data stored in the memory 513 and refer to the image data as a previous frame, to execute noise reduction processing or the like in a time direction.

Further, the signal processing unit 512 may supply the image data that has been subjected to signal processing to a different information processing device 530 via a transfer path 523. The different information processing device 530 may acquire the image data supplied via the transfer path 523.

In addition, the signal processing unit 512 can supply the image data that has been subjected to signal processing to a storage device 540 via a transfer path 524, and store the image data in the storage device 540. Besides, the different information processing device 530 may read the image data stored in the storage device 540 via a transfer path 525 to acquire the image data.

According to the system described above, reduction of a bandwidth and a storage capacity is achievable by coding of image data at the time of transfer or storage of the image data. By applying the present technology to the image data which may contain reserved words, code quantity control is achievable while some of pixel values of sensing data are securely retained.

For example, the coding device 100 may be applied to the signal processing unit 512 as an interface with the bus 521. In addition, the decoding device 200 may be applied as an interface with the bus 522. Specifically, the signal processing unit 512 may code image data by using the coding device 100, and store the coded data in the memory 513. Thereafter, the signal processing unit 512 may decode the coded data of the image data read from the memory 513, by using the decoding device 200, to obtain the image data.

Similarly, the coding device 100 may be applied to the signal processing unit 512 as an interface with the transfer path 523 or the transfer path 524. Moreover, the decoding device 200 may be applied to the information processing device 530 as an interface with the transfer path 523 or the transfer path 524.

In such a manner, reduction of each bandwidth used by the buses 521 and 522 and by the transfer path 523 to the transfer path 525 and reduction of each storage capacity used by the memory 513 and the storage device 540 are achievable while deterioration of reserved words is avoided.

<Application example 2>

Further, the present technology is also applicable to a polarization camera. FIG. 23 is a block diagram depicting an example of a main configuration of a polarization camera. A polarization camera 600 depicted in FIG. 23 includes a polarization sensor 601 and a signal processing unit 602. The polarization sensor 601 photoelectrically converts incident light at respective pixels to generate image data, and supplies the image data to the signal processing unit 602. The signal processing unit 602 performs predetermined signal processing with use of the image data to obtain a degree of polarization, a polarization phase, an average pixel value, and the like, and outputs these items.

For example, the polarization sensor 601 includes on-chip lenses 611, polarizers 612, and an image sensor 613 stacked on each other as depicted in A of FIG. 24. As depicted in the figure, the polarizers 612 include polarizers arranged in four directions, i.e., vertical, horizontal, and oblique directions. In such a case, there is a possibility that pixels of the image sensor 613 corresponding to some polarizers have saturated pixel values, and that pixels of the image sensor 613 corresponding to some other polarizers have low light sensitivity. In an example depicted in B of FIG. 24, pixels corresponding to the polarizers 612 located in an upper left part of the image data 621 have low pixel values, while pixels corresponding to the polarizers 612 located in a lower right part have saturated pixel values.

In such a case, there is a possibility that sensing data output from the polarization sensor 601 contains reserved words. By applying the present technology (coding device 100 and decoding device 200) to the signal processing unit 602 in this situation, code quantity control is achievable while some of pixel values of the sensing data are securely retained.

<Application example 3>

Further, the present technology is applicable to not only iToF but also a system of dToF. In addition, the present technology is also applicable to a DVS (Dynamic Vision Sensor) which performs asynchronous processing for each pixel to detect a change of luminance of an imaging target and output data.

A pixel unable to image, called a pixel defect, may be produced in an image sensor during manufacture or use. This pixel defect often appears as a black point having a pixel value of 0 or a white point having a saturated pixel value. An ordinary image sensor used in this situation is capable of relatively easily determining whether each pixel is a pixel defect or a normal pixel according to a difference from peripheral pixel values.

On the other hand, in a case of a sensor which outputs a pixel value at the time of reception of infrared light, such as dToF, or a sensor which outputs a pixel value only when a luminance value changes, such as a DVS, a defect pixel is difficult to identify in reference to values of peripheral pixels. Accordingly, a state as a defect pixel needs to be separately indicated.

For example, there is a case where outputs from the DVS sensor are integrated for each fixed period to use the outputs as image data for recognizing a change of pixel values. Even if a pixel value is 0 for such a reason that this pixel is a defect pixel, it is difficult to determine whether this defect pixel has been produced as a result of only a problem of data, or because originally no event is caused. For meeting a necessity of distinction between these conditions, there is a case where reserved words are prepared for output data to record a pixel defect position.

In the case of dToF, a depth method is calculated by a change of a light reception luminance value with use of sensor output data. However, as in a DVS, it is difficult to check a pixel defect position in reference to only data obtained after depth calculation. For coping with this problem, there is a case where a reserved word indicating a defect pixel is set for the corresponding pixel value in the detected depth data, and output.

By applying the present technology to the foregoing cases, code quantity control is achievable while some of pixel values (i.e., reserved words) of sensing data are securely retained.

<5. Supplementary notes>

<Computer>

A series of processes described above may be executed either by hardware or by software. In a case where the series of processes is executed by software, a program constituting the software is installed in a computer. Examples of the computer here include a computer incorporated in dedicated hardware and a computer capable of executing various functions under various programs installed in the computer, such as a general-purpose personal computer.

FIG. 25 is a block diagram depicting a hardware configuration example of a computer which executes the series of processes described above under a program.

A computer 900 depicted in FIG. 25 includes a CPU (Central Processing Unit) 901, a ROM (Read Only Memory) 902, and a RAM (Random Access Memory) 903 connected to each other via a bus 904.

An input/output interface 910 is further connected to the bus 904. An input unit 911, an output unit 912, a storage unit 913, a communication unit 914, and a drive 915 are connected to the input/output interface 910.

For example, the input unit 911 includes a keyboard, a mouse, a microphone, a touch panel, an input terminal, and others. For example, the output unit 912 includes a display, a speaker, an output terminal, and others. For example, the storage unit 913 includes a hard disk, a RAM disk, a non-volatile memory, and others. For example, the communication unit 914 includes a network interface. The drive 915 drives a removable medium 921 such as a magnetic disk, an optical disk, a magneto-optical disk, and a semiconductor memory.

According to the computer configured as described above, for example, the CPU 901 loads a program stored in the storage unit 913 into the RAM 903 via the input/output interface 910 and the bus 904, and executes the loaded program to perform the series of processes described above. Data and the like required when the CPU 901 executes various processes are also stored in the RAM 903 as necessary.

For example, the program executed by the computer is allowed to be recorded in the removable medium 921 as a package medium or the like, and applied in this form. In that case, the program is allowed to be installed into the storage unit 913 via the input/output interface 910 from the removable medium 921 attached to the drive 915.

Moreover, the program is allowed to be provided via a wired or wireless transfer medium such as a local area network, the Internet, and digital satellite broadcasting. In that case, the program is allowed to be received by the communication unit 914, and installed into the storage unit 913.

Furthermore, the program is allowed to be installed in the ROM 902 or the storage unit 913 beforehand.

<Application targets of present technology>

The present technology is applicable to any configuration. For example, the present technology is applicable to various electronic apparatuses, such as a transmitter or a receiver (e.g., television receiver, cellular phone) for satellite broadcasting, wired broadcasting such as cable TV, online streaming, streaming to terminals via cellular communication, and the like, and a device for recording images in a medium such as an optical disk, a magnetic disk, and a flash memory, or reproducing images from these storage media (e.g., hard disk recorder, camera).

Moreover, for example, the present technology may also be practiced in a partial configuration of a device, such as a processor (e.g., video processor) as system LSI (Large Scale Integration), a module (e.g., video module) using multiple processors or the like, a unit (e.g., video unit) using multiple modules or the like, and a set (e.g., video set) as a unit to which other functions are added.

Further, for example, the present technology is also applicable to a network system including multiple devices. For example, the present technology may be practiced in cloud computing where multiple devices share processes and perform the processes in cooperation with each other via a network. For example, the present technology may be practiced in a cloud service which provides services associated with images (moving images) for any terminal such as a computer, an AV (Audio Visual) apparatus, a portable information processing terminal, and an IoT (Internet of Things) device.

Note that the system in the present description refers to a set of multiple constituent elements (e.g., devices, modules (parts)), and does not require all constituent elements to be accommodated within an identical housing. Accordingly, both multiple devices accommodated in separate housings and connected via a network and one device which has multiple modules accommodated in one housing are defined as systems.

<Field/use to which present technology is applicable>

A system, a device, a processing unit, and the like to which the present technology is applied are available in any field, such as transportation, medical treatments, crime prevention, agriculture, stock breeding, mining, beauty, plants, home appliances, meteorology, and natural surveillance. In addition, use application of those may be any use application.

<Others>

Embodiments according to the present technology are not limited to the embodiments described above, and may be modified in various manners within a range not departing from the subject matters of the present technology.

For example, a configuration described as one device (or processing unit) may be divided into multiple devices (or processing units). Conversely, a configuration described as multiple devices (or processing units) may be united into one device (or processing unit). In addition, needless to say, a configuration other than the configurations described above may be added to each configuration of the devices (or processing units). Further, a part of a configuration of a certain device (or processing unit) may be included in a configuration of a different device (or different processing unit) if configurations or operations in the entire system are substantially identical.

In addition, for example, the program described above may be executed by any device. In this case, this device is only required to have a necessary function (e.g., functional block), and acquire necessary information.

Moreover, for example, respective steps included in one flowchart may be executed by one device, or may be shared and executed by multiple devices. Further, in a case where multiple processes are included in one step, the multiple processes may be executed by one device, or may be shared and executed by multiple devices. In other words, multiple processes included in one step may be executed as processes in multiple steps. Conversely, processes described as multiple steps may be collectively executed in one step.

In addition, for example, processes in steps describing a program executed by a computer may be executed in time series in the order described in the present description, or may be executed in parallel or at a necessary timing such as an occasion when a call is made. In other words, processes in respective steps may be executed in an order different from the order described above as long as no contradiction is caused. Besides, the processes in the steps describing this program may be executed in parallel with processes of a different program, or executed in combination with processes of a different program.

Moreover, for example, each of multiple techniques associated with the present technology may be independently practiced as a single technology as long as no contradiction is caused. Needless to say, any multiple techniques of the present technology may be combined and practiced. For example, a part or all of the present technology described in any one of the embodiments may be combined with a part or all of the present technology described in a different one of the embodiments. Moreover, a part or all of any technique of the present technology described above may be combined and practiced in conjunction with a different technology not described above.

Note that the present technology may also have the following configurations.

(1) An information processing device including:

a data determining unit that determines whether or not each of pixel values of sensing data is a reserved word that is a predetermined value determined beforehand, and generates a flag map that indicates a position of a reserved word pixel that is a pixel having the reserved word as a pixel value and non-reserved word data that includes a pixel value of a non-reserved word pixel that is a pixel other than the reserved word pixel;
a flag coding unit that performs lossless coding on the flag map generated by the data determining unit, to generate a flag stream; and
a pixel coding unit that codes the non-reserved word data generated by the data determining unit, to generate a pixel stream.

(2) The information processing device according to (1), further including:
a multiplexing unit that multiplexes the flag stream generated by the flag coding unit and the pixel stream generated by the pixel coding unit, to generate a sensing stream.
(3) The information processing device according to (2), in which the sensing stream includes information that has a fixed bit length.
(4) The information processing device according to (3), in which the pixel coding unit generates the pixel stream that has a bit length corresponding to a difference between the fixed bit length of the sensing stream and a bit length of the flag stream.
(5) The information processing device according to (4), in which

the flag coding unit supplies information associated with the bit length of the generated flag stream to the pixel coding unit, and
the pixel coding unit determines the bit length of the pixel stream in reference to the information.

(6) The information processing device according to (5), in which

the flag coding unit supplies, to the pixel coding unit, flag information that indicates whether or not the flag map contains the reserved word pixel, and
the pixel coding unit determines the bit length of the pixel stream according to a value of the flag information.

(7) The information processing device according to (6), in which

the flag coding unit generates the flag stream that includes only the flag information in a case where the flag information has a value indicating that the flag map does not contain the reserved word pixel, and
the flag coding unit generates the flag stream that includes the flag information and the flag map in a case where the flag information has a value indicating that the flag map contains the reserved word pixel.

(8) The information processing device according to any one of (1) through (7), in which the flag map is information having a fixed length.
(9) The information processing device according to any one of (1) through (7), in which the flag map is information having a variable length.
(10) An information processing method including:

determining whether or not each of pixel values of sensing data is a reserved word that is a predetermined value determined beforehand, and generating a flag map that indicates a position of a reserved word pixel that is a pixel having the reserved word as a pixel value and non-reserved word data that includes a pixel value of a non-reserved word pixel that is a pixel other than the reserved word pixel;

performing lossless coding on the generated flag map to generate a flag stream; and

coding the generated non-reserved word data to generate a pixel stream.

(11) An information processing device including:

a flag decoding unit that performs lossless decoding on a flag stream contained in a sensing stream, to generate a flag map that indicates a position of a reserved word pixel that is a pixel having a reserved word that is a predetermined value determined beforehand, as a pixel value;

a pixel decoding unit that decodes a pixel stream that is coded data of non-reserved word data being contained in the sensing stream and including a pixel value of a non-reserved word pixel that is a pixel other than the reserved word pixel, to generate a pixel map containing the non-reserved word data; and

a data combining unit that combines the flag map generated by the flag decoding unit and the pixel map generated by the pixel decoding unit, to generate sensing data.

(12) The information processing device according to (11), further including:

a demultiplexing unit that demultiplexes the sensing stream to extract the pixel stream.

(13) The information processing device according to (12), in which the sensing stream includes information that has a fixed bit length.

(14) The information processing device according to (13), in which the demultiplexing unit extracts the pixel stream that has a bit length corresponding to a difference between the fixed bit length of the sensing stream and a bit length of the flag stream.

(15) The information processing device according to (14), in which

the flag decoding unit supplies information associated with the bit length of the pixel stream to the demultiplexing unit, and

the demultiplexing unit extracts the pixel stream from the sensing stream in reference to the information.

(16) The information processing device according to (15), in which

the flag decoding unit supplies, to the demultiplexing unit, flag information that indicates whether or not the flag map contains the reserved word pixel, and

the demultiplexing unit extracts the pixel stream from the sensing stream according to a value of the flag information.

(17) The information processing device according to (16), in which

the flag decoding unit performs lossless decoding on the flag stream to generate the flag information,

the flag decoding unit generates the flag map where all pixels are pixels other than the reserved word pixel in a case where the flag information has a value indicating that the flag map does not contain the reserved word pixel, and

the flag decoding unit performs lossless decoding on the flag stream to generate the flag map in a case where the flag information has a value indicating that the flag map contains the reserved word pixel.

(18) The information processing device according to any one of (11) through (17), in which the flag map is information having a fixed length.

(19) The information processing device according to any one of (11) through (17), in which the flag map is information having a variable length.

(20) An information processing method including:

performing lossless decoding on a flag stream contained in a sensing stream, to generate a flag map that indicates a position of a reserved word pixel that is a pixel having a reserved word that is a predetermined value determined beforehand, as a pixel value;

decoding a pixel stream that is coded data of non-reserved word data being contained in the sensing stream and including a pixel value of a non-reserved word pixel that is a pixel other than the reserved word pixel, to generate a pixel map containing the non-reserved word data; and

combining the generated flag map and the generated pixel map to generate sensing data.

[Reference Signs List]

100: Coding device
101: Block dividing unit
102: Sensing data coding unit
103: Output unit
131: Data determining unit
132: Flag coding unit
133: Pixel coding unit
134: Multiplexing unit
161: Reserved word pixel processing unit
162: 6-bit length coding unit
163: 8-bit length coding unit
164: Selection unit
200: Decoding device
201: Input unit
202: Sensing data decoding unit
203: Block reconfiguration unit
231: Flag decoding unit
232: Demultiplexing unit
233: Pixel decoding unit
234: Data combining unit
510: Detection device
511: Image sensor
512: Signal processing unit
513: Memory
530: Information processing device
540: Storage device
600: Polarization camera
601: Polarization sensor
602: Signal processing unit
900: Computer

**Claims**

1. An information processing device comprising:

   a data determining unit that determines whether or not each of pixel values of sensing data is a reserved word that is a predetermined value determined beforehand, and generates a flag map that indicates a position of a reserved word pixel that is a pixel having the reserved word as a pixel value and non-reserved word data that includes a pixel value of a non-reserved word pixel that is a pixel other than the reserved word pixel;
   a flag coding unit that performs lossless coding on the flag map generated by the data determining unit, to generate a flag stream; and
   a pixel coding unit that codes the non-reserved word data generated by the data determining unit, to generate a pixel stream.

2. The information processing device according to claim 1, further comprising:

   a multiplexing unit that multiplexes the flag stream generated by the flag coding unit and the pixel stream generated by the pixel coding unit, to generate a sensing stream.

3. The information processing device according to claim 2, wherein the sensing stream includes information that has a fixed bit length.

4. The information processing device according to claim 3, wherein the pixel coding unit generates the pixel stream that has a bit length corresponding to a difference between the fixed bit length of the sensing stream and a bit length of the flag stream.

5. The information processing device according to claim 4, wherein

the flag coding unit supplies information associated with the bit length of the generated flag stream to the pixel coding unit, and
the pixel coding unit determines the bit length of the pixel stream in reference to the information.

6. The information processing device according to claim 5, wherein

the flag coding unit supplies, to the pixel coding unit, flag information that indicates whether or not the flag map contains the reserved word pixel, and
the pixel coding unit determines the bit length of the pixel stream according to a value of the flag information.

7. The information processing device according to claim 6, wherein

the flag coding unit generates the flag stream that includes only the flag information in a case where the flag information has a value indicating that the flag map does not contain the reserved word pixel, and
the flag coding unit generates the flag stream that includes the flag information and the flag map in a case where the flag information has a value indicating that the flag map contains the reserved word pixel.

8. The information processing device according to claim 1, wherein the flag map is information having a fixed length.

9. The information processing device according to claim 1, wherein the flag map is information having a variable length.

10. An information processing method comprising:

determining whether or not each of pixel values of sensing data is a reserved word that is a predetermined value determined beforehand, and generating a flag map that indicates a position of a reserved word pixel that is a pixel having the reserved word as a pixel value and non-reserved word data that includes a pixel value of a non-reserved word pixel that is a pixel other than the reserved word pixel;
performing lossless coding on the generated flag map to generate a flag stream; and
coding the generated non-reserved word data to generate a pixel stream.

11. An information processing device comprising:

a flag decoding unit that performs lossless decoding on a flag stream contained in a sensing stream, to generate a flag map that indicates a position of a reserved word pixel that is a pixel having a reserved word that is a predetermined value determined beforehand, as a pixel value;
a pixel decoding unit that decodes a pixel stream that is coded data of non-reserved word data being contained in the sensing stream and including a pixel value of a non-reserved word pixel that is a pixel other than the reserved word pixel, to generate a pixel map containing the non-reserved word data; and
a data combining unit that combines the flag map generated by the flag decoding unit and the pixel map generated by the pixel decoding unit, to generate sensing data.

12. The information processing device according to claim 11, further comprising:
a demultiplexing unit that demultiplexes the sensing stream to extract the pixel stream.

13. The information processing device according to claim 12, wherein the sensing stream includes information that has a fixed bit length.

14. The information processing device according to claim 13, wherein the demultiplexing unit extracts the pixel stream that has a bit length corresponding to a difference between the fixed bit length of the sensing stream and a bit length of the flag stream.

15. The information processing device according to claim 14, wherein

the flag decoding unit supplies information associated with the bit length of the pixel stream to the demultiplexing unit, and

the demultiplexing unit extracts the pixel stream from the sensing stream in reference to the information.

16. The information processing device according to claim 15, wherein

the flag decoding unit supplies, to the demultiplexing unit, flag information that indicates whether or not the flag map contains the reserved word pixel, and

the demultiplexing unit extracts the pixel stream from the sensing stream according to a value of the flag information.

17. The information processing device according to claim 16, wherein

the flag decoding unit performs lossless decoding on the flag stream to generate the flag information,

the flag decoding unit generates the flag map where all pixels are pixels other than the reserved word pixel in a case where the flag information has a value indicating that the flag map does not contain the reserved word pixel, and

the flag decoding unit performs lossless decoding on the flag stream to generate the flag map in a case where the flag information has a value indicating that the flag map contains the reserved word pixel.

18. The information processing device according to claim 11, wherein the flag map is information having a fixed length.

19. The information processing device according to claim 11, wherein the flag map is information having a variable length.

20. An information processing method comprising:

performing lossless decoding on a flag stream contained in a sensing stream, to generate a flag map that indicates a position of a reserved word pixel that is a pixel having a reserved word that is a predetermined value determined beforehand, as a pixel value;

decoding a pixel stream that is coded data of non-reserved word data being contained in the sensing stream and including a pixel value of a non-reserved word pixel that is a pixel other than the reserved word pixel, to generate a pixel map containing the non-reserved word data; and

combining the generated flag map and the generated pixel map to generate sensing data.

# FIG.1

# FIG.2

# FIG.3

EP 4 280 606 A1

FIG.4

A

B

EP 4 280 606 A1

FIG.5

| 100 | 110 | 120 | 130 | 998 | 998 | 998 | 998 |
| 100 | 110 | 120 | 130 | 998 | 998 | 998 | 998 |
| 100 | 110 | 120 | 130 | 998 | 998 | 998 | 998 |
| 100 | 110 | 120 | 130 | 999 | 999 | 999 | 999 |
| 100 | 110 | 120 | 130 | 999 | 999 | 999 | 999 |

40

EP 4 280 606 A1

# F I G . 7

Sensing Data → 131 DATA DETERMINING UNIT → Flag Map → 132 FLAG CODING UNIT → Flag Stream → 134 MULTIPLEXING UNIT → Sensing Stream

Flag Stream Bit Length (IsFlagExist) → 133 PIXEL CODING UNIT → Pixel Stream

IMAGE DATA

102

# FIG.8

| IsFlagExist code value | semantics |
|---|---|
| 0 | ONLY NORMAL PIXEL IN CORRESPONDING BLOCK |
| 1 | FLAG DATA EXIST IN CORRESPONDING BLOCK |

A

141

| ① | ① | ① | ① | ① | ① | ① | ① |
|---|---|---|---|---|---|---|---|

①NORMAL PIXEL, ②SATURATED, ③LOW LIGHT SENSITIVITY

| 0 | :IsFlagExsit |
|---|---|

1 bit stream

142

143

| ① | ① | ① | ① | ② | ② | ③ | ③ |
|---|---|---|---|---|---|---|---|

```
1       :IsFlagExsit
00      : ①
00      : ①
00      : ①
00      : ①
01      : ②
01      : ②
10      : ③
10      : ③
```

17 bit stream

144

B

C

EP 4 280 606 A1

# FIG.9

| FLAG DATA REQUIRING MANY BITS | FLAG DATA (LOSSLESS CODING) | IMAGE DATA (LOSSY CODING) |
|---|---|---|

RAISE COMPRESSION RATE OF IMAGE DATA
TO REDUCE GENERATED QUANTITY

| SMALL VOLUME COMPRESSED FLAG DATA | FLAG DATA (LOSSLESS CODING) | IMAGE DATA (LOSSY CODING) |
|---|---|---|

LOWER COMPRESSION RATE OF IMAGE DATA
TO REDUCE IMAGE QUALITY DETERIORATION

BIT RATE DESIGNATED BY USER

# F I G . 1 0

# FIG.11

| 1 |
|---|
| Flag VALUE IN Flag Stream |
| Pixel Stream |

Flag Stream
1 + 2 × (NUMBER OF PIXELS)
(IN CASE WHERE N=2)

Pixel Stream
6 × (NUMBER OF PIXELS)

A

| 0 |
|---|
| Pixel Stream |

Flag Stream
1bit

Pixel Stream
8 × (NUMBER OF PIXELS)

B

EP 4 280 606 A1

# F I G . 1 2

```
         ┌─────────────────────────────┐
         (    CODING PROCESS START     )
         └─────────────────────────────┘
                       │
                       ▼
    ┌──────────────────────────────────────┐ S101
    │        DIVIDE FRAME INTO BLOCK        │
    └──────────────────────────────────────┘
                       │
                       ▼
    ┌──────────────────────────────────────┐ S102
    │          CODE FOR EACH BLOCK          │
    └──────────────────────────────────────┘
                       │
                       ▼
    ┌──────────────────────────────────────┐ S103
    │         OUTPUT SENSING STREAM         │
    └──────────────────────────────────────┘
                       │
                       ▼
              ┌─────────────────┐
              (       END       )
              └─────────────────┘
```

# FIG.13

```
        ┌─────────────────────────────────────────┐
        │    SENSING DATA CODING PROCESS START     │
        └─────────────────────────────────────────┘
                            │
                            ▼
    ┌─────────────────────────────────────────┐  S131
    │   DISTINGUISH BETWEEN NORMAL PIXEL DATA  │
    │      AND RESERVED WORD PIXEL DATA        │
    └─────────────────────────────────────────┘
                            │
                            ▼
    ┌─────────────────────────────────────────┐  S132
    │     PERFORM LOSSLESS CODING ON Flag Map  │
    └─────────────────────────────────────────┘
                            │
                            ▼
    ┌─────────────────────────────────────────┐  S133
    │       SET BIT LENGTH OF Pixel Stream IN  │
    │  REFERENCE TO BIT LENGTH OF Flag Stream  │
    └─────────────────────────────────────────┘
                            │
                            ▼
    ┌─────────────────────────────────────────┐  S134
    │              CODE IMAGE DATA             │
    └─────────────────────────────────────────┘
                            │
                            ▼
    ┌─────────────────────────────────────────┐  S135
    │   MULTIPLEX Flag Stream AND Pixel Stream TO │
    │   GENERATE FIXED LENGTH Sensing Stream   │
    └─────────────────────────────────────────┘
                            │
                            ▼
                   ┌──────────────┐
                   │    RETURN     │
                   └──────────────┘
```

FIG.14

EP 4 280 606 A1

# FIG.15

# FIG.16

| Flag Stream{ | | |
|---|---|---|
| **IsFlagExist** | 1 | bslbf |
| if(IsFlagExist){ | | |
| for(i=0; i< NumPixels; i++){ | | |
| **FlagMap[i]** | N | bslbf |
| } | | |
| } | | |
| } | | |

EP 4 280 606 A1

# FIG.17

| | | |
|---|---|---|
| Pixel Stream{ | | |
| for(i=0; i< NumPixels; i++){ | | |
| if(IsFlagExist){ | | |
| MIPI CSI-2 Annex E 12-6-12 | 6 | bslbf |
| }else{ | | |
| MIPI CSI-2 Annex E 12-8-12 | 8 | bslbf |
| } | | |
| } | | |
| } | | |

# FIG.18

```
            ┌─────────────────────────────┐
            │    DECODING PROCESS START    │
            └─────────────────────────────┘
                           │
                           ▼
     ┌─────────────────────────────────────────┐ S201
     │         ACQUIRE SENSING STREAM           │
     └─────────────────────────────────────────┘
                           │
                           ▼
     ┌─┬─────────────────────────────────────┬─┐ S202
     │ │        DECODE FOR EACH BLOCK        │ │
     └─┴─────────────────────────────────────┴─┘
                           │
                           ▼
     ┌─────────────────────────────────────────┐ S203
     │    RECONFIGURE BLOCK TO GENERATE FRAME   │
     └─────────────────────────────────────────┘
                           │
                           ▼
                   ┌───────────────┐
                   │      END      │
                   └───────────────┘
```

# FIG.19

```
        ┌─────────────────────────────────────────┐
        │      SENSING DATA DECODING PROCESS       │
        └─────────────────────────────────────────┘
                           │
                           ▼
     ┌─────────────────────────────────────────┐ S231
     │            DECODE Flag Stream            │
     └─────────────────────────────────────────┘
                           │
                           ▼
     ┌─────────────────────────────────────────┐ S232
     │ DEMULTIPLEX Sensing Stream TO EXTRACT    │
     │               Pixel Stream               │
     └─────────────────────────────────────────┘
                           │
                           ▼
     ┌─────────────────────────────────────────┐ S233
     │            DECODE Pixel Stream           │
     └─────────────────────────────────────────┘
                           │
                           ▼
     ┌─────────────────────────────────────────┐ S234
     │ COMBINE Flag Map AND Pixel Map TO        │
     │         GENERATE Sensing Data            │
     └─────────────────────────────────────────┘
                           │
                           ▼
                   ┌───────────────┐
                   │     RETURN    │
                   └───────────────┘
```

# FIG.20

| Map Value (BINARY NOTATION) | semantics |
|---|---|
| 0b0 | ① NORMAL PIXEL |
| 0b10 | ② SATURATED |
| 0b110 | ③ LOW LIGHT SENSITIVITY |

EP 4 280 606 A1

# FIG.21

A

| Pixel Stream{ | | |
|---|---|---|
| for(i=0; i< NumPixels-Flag NUMBER OF PIXELS ; i++) { | | |
| if(Flag OF 1 OR 2 PIXELS ) { | | |
| MIPI CSI-2 Annex E 12-6-12 | 6 | bslbf |
| }else if(Flag OF 3 PIXELS) { | | |
| MIPI CSI-2 Annex E 12-7-12 | 7 | bslbf |
| }else{ | | |
| MIPI CSI-2 Annex E 12-8-12 | 8 | bslbf |
| } | | |
| } | | |
| stuffing bits | | |
| } | | |

B

EP 4 280 606 A1

# FIG.22

# FIG.23

# FIG.24

601

A

B

EP 4 280 606 A1

# FIG.25

EP 4 280 606 A1

### INTERNATIONAL SEARCH REPORT

| International application No. |
| --- |
| **PCT/JP2021/048119** |

**A. CLASSIFICATION OF SUBJECT MATTER**

*H04N 19/70*(2014.01)i
FI: H04N19/70

According to International Patent Classification (IPC) or to both national classification and IPC

**B. FIELDS SEARCHED**

Minimum documentation searched (classification system followed by classification symbols)

H04N19/00-19/98

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

IEEE Xplore & KEYWORDS: flag, index, map, etc.

**C. DOCUMENTS CONSIDERED TO BE RELEVANT**

| Category* | Citation of document, with indication, where appropriate, of the relevant passages | Relevant to claim No. |
| --- | --- | --- |
| X | PU, Wei et al. Palette Mode Coding in HEVC Screen Content Coding Extension. IEEE Journal on Emerging and Selected Topics in Circuits and Systems. 18 November 2016, vol. 6, issue 4, pp. 420-432, Internet: <URL: https://ieeexplore.ieee.org/document/7748474>, <DOI: 10.1109/JETCAS.2016.2605661> in particular, sections II.A, II.D | 1-2, 8-12, 18-20 |
| A | entire text, all drawings | 3-7, 13-17 |
| A | JP 2017-513334 A (VID SCALE, INC.) 25 May 2017 (2017-05-25) entire text, all drawings | 1-20 |
| A | JP 11-261983 A (TOSHIBA CORP.) 24 September 1999 (1999-09-24) entire text, all drawings | 1-20 |
| A | 関口俊一 他. HEVCに基づくスクリーンコンテンツ向け高能率符号化方式. 電子情報通信学会論文誌 D. 01 September 2015, vol. J98-D, no. 9, pp. 1190-1200, (IEICE Transactions on Information and Systems), non-official translation (SEKIGUCHI, Shun-ichi et al. High Efficiency Screen Content Coding Based on HEVC.) entire text, all drawings | 1-20 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 February 2022** | **08 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/048119**

| Patent document cited in search report | | | Publication date (day/month/year) | Patent family member(s) | | | Publication date (day/month/year) |
|---|---|---|---|---|---|---|---|
| JP | 2017-513334 | A | 25 May 2017 | US | 2015/0264365 | A1 | |
| | | | | entire text, all drawings | | | |
| | | | | CN | 106165424 | A | |
| | | | | KR 10-2016-0134743 | | A | |
| JP | 11-261983 | A | 24 September 1999 | (Family: none) | | | |

## REFERENCES CITED IN THE DESCRIPTION

**Patent documents cited in the description**

- JP 2001313569 A

**Non-patent literature cited in the description**

- **KEITA YASUTOMI ; SHOJI KAWAHITO.** Technical Description Time-of-Flight Camera. *The journal of the Institute of Image Information and Television Engineers,* 29 August 2016, vol. 70 (11), 880-885